# EUROPEAN PATENT APPLICATION

(11) **EP 4 801 094 A1**
(43) Date of publication of application: **02.09.2026**
(21) Application number: 24894746.7
(22) Date of filing: 13.11.2024
(51) Int. Cl.: H04W 24/02, H04W 48/10, H04W 84/06, H04W 88/14

(54) **METHOD AND DEVICE FOR TRANSMITTING INFORMATION IN WIRELESS COMMUNICATION SYSTEM USING NON-TERRESTRIAL NETWORK**

(30) Priority: 24.11.2023 KR 20230165226
(71) Applicant: Samsung Electronics Co., Ltd., Suwon-si, Gyeonggi-do 16677 (KR)
(72) Inventor: KIM, Sunhyun, Suwon-si Gyeonggi-do 16677 (KR); KO, Daeun, Suwon-si Gyeonggi-do 16677 (KR); KIM, Dongmyung, Suwon-si Gyeonggi-do 16677 (KR); LEE, Sangho, Suwon-si Gyeonggi-do 16677 (KR)
(74) Representative: Nederlandsch Octrooibureau
(86) International application number: PCT/KR2024/096486
(87) International publication number: WO 2025/110856

(57) **Abstract**

An operation method of a first network entity (e.g., an NMF) according to an embodiment of the present disclosure may comprise the steps of: identifying that a non-terrestrial network communication node connected to a first base station is changed from a first node to a second node; determining whether information about the second node is stored; and transmitting the information about the second node to the first base station on the basis of whether the information about the second node is stored.

## Description

### [Technical Field]

The disclosure relates to a method and a device for transferring information regarding a non-terrestrial network communication node in a wireless communication system using a non-terrestrial network (NTN). In particular, the disclosure relates to a method and a device for signaling related information in case that information regarding a non-terrestrial network communication node connected to a base station is changed.

### [Background Art]

Considering the development of wireless communication from generation to generation, the technologies have been developed mainly for services targeting humans, such as voice calls, multimedia services, and data services. Following the commercialization of 5G (5th generation) communication systems, it is expected that the number of connected devices will exponentially grow. Increasingly, these will be connected to communication networks. Examples of connected things may include vehicles, robots, drones, home appliances, displays, smart sensors connected to various infrastructures, construction machines, and factory equipment. Mobile devices are expected to evolve in various form-factors, such as augmented reality glasses, virtual reality headsets, and hologram devices. In order to provide various services by connecting hundreds of billions of devices and things in the 6G (6th generation) era, there have been ongoing efforts to develop improved 6G communication systems. For these reasons, 6G communication systems are referred to as beyond-5G systems.

6G communication systems, which are expected to be commercialized around 2030, will have a peak data rate of tera (1,000 giga)-level bit per second (bps) and a radio latency less than 100µsec, and thus will be 50 times as fast as 5G communication systems and have the 1/10 radio latency thereof.

In order to accomplish such a high data rate and an ultra-low latency, it has been considered to implement 6G communication systems in a terahertz (THz) band (for example, 95 gigahertz (GHz) to 3THz bands). It is expected that, due to severer path loss and atmospheric absorption in the terahertz bands than those in mmWave bands introduced in 5G, technologies capable of securing the signal transmission distance (that is, coverage) will become more crucial. It is necessary to develop, as major technologies for securing the coverage, Radio Frequency (RF) elements, antennas, novel waveforms having a better coverage than Orthogonal Frequency Division Multiplexing (OFDM), beamforming and massive Multiple-input Multiple-Output (MIMO), Full Dimensional MIMO (FD-MIMO), array antennas, and multiantenna transmission technologies such as large-scale antennas. In addition, there has been ongoing discussion on new technologies for improving the coverage of terahertz-band signals, such as metamaterial-based lenses and antennas, Orbital Angular Momentum (OAM), and Reconfigurable Intelligent Surface (RIS).

Moreover, in order to improve the spectral efficiency and the overall network performances, the following technologies have been developed for 6G communication systems: a full-duplex technology for enabling an uplink transmission and a downlink transmission to simultaneously use the same frequency resource at the same time; a network technology for utilizing satellites, High-Altitude Platform Stations (HAPS), and the like in an integrated manner; an improved network structure for supporting mobile base stations and the like and enabling network operation optimization and automation and the like; a dynamic spectrum sharing technology via collision avoidance based on a prediction of spectrum usage; an use of Artificial Intelligence (AI) in wireless communication for improvement of overall network operation by utilizing AI from a designing phase for developing 6G and internalizing end-to-end AI support functions; and a next-generation distributed computing technology for overcoming the limit of UE computing ability through reachable superhigh-performance communication and computing resources (such as Mobile Edge Computing (MEC), clouds, and the like) over the network. In addition, through designing new protocols to be used in 6G communication systems, developing mechanisms for implementing a hardware-based security environment and safe use of data, and developing technologies for maintaining privacy, attempts to strengthen the connectivity between devices, optimize the network, promote softwarization of network entities, and increase the openness of wireless communications are continuing.

It is expected that research and development of 6G communication systems in hyper-connectivity, including person to machine (P2M) as well as machine to machine (M2M), will allow the next hyper-connected experience. Particularly, it is expected that services such as truly immersive eXtended Reality (XR), high-fidelity mobile hologram, and digital replica could be provided through 6G communication systems. In addition, services such as remote surgery for security and reliability enhancement, industrial automation, and emergency response will be provided through the 6G communication system such that the technologies could be applied in various fields such as industry, medical care, automobiles, and home appliances.

### [Disclosure of Invention]

### [Technical Problem]

The disclosure relates to non-terrestrial network (NTN) communication wherein non-terrestrial network communication nodes (e.g., satellites, HAPSs, UAMs, or drones) are used such that communication services may be provided in areas in which communication services are impossible (e.g., sea, polar regions, remote areas, or in the air).] The high-altitude platform station (HAPS) refers to an unmanned aerial vehicle equipped with communication and broadcasting equipment and other wireless application equipment, and may be used for mobile communication, broadcast relay, remote search, radio wave monitoring, weather observation, and the like at an altitude of 20-30 km. The urban air mobility (UAM) may refer to an aerial vehicle capable of transporting people or cargo in the airspace of a city.

Non-terrestrial network communication may use a communication node such as a satellite as a relay to establish an communicable area in a region where it is physically or economically impossible to install a base station for communication.

Satellites usable in non-terrestrial network (NTN) communication may be classified into geostationary Earth orbit (GEO) satellites, medium Earth orbit (MEO) satellites, and low Earth orbit (LEO) satellites, according to the altitude at which the satellites' orbits are located. In the case of non-terrestrial network communication using LEO satellites, the round-trip propagation time is short, and thus the delay time is short, because the LEO satellites are located at a low altitude (200km to 2000km) compared to other satellites (GEO and MEO). However, since the LEO satellites have a higher speed (e.g., 7.56 km/s at 600 km altitude) than other satellites (GEO, MEO), the frequency/time synchronization is continuously changed in stationary UEs or satellite antennas. Therefore, UEs need to calculate and correct changes in synchronization due to the satellite's mobility.

In the case of 3GPP (3^{rd} Generation Partnership Project) standards, standardization has been conducted in relation to non-terrestrial network communication such that, when a UE accesses a base station through a satellite, the UE can access the base station after partially self-correcting the frequency and time synchronization. In order for the UE to correct frequency and time synchronization, information regarding the UE's location and mobility, and information regarding the satellite's location and mobility are essential. The UE may measure the UE's mobility and location information by using the global navigation satellite system (GNSS), and may use the measurement result value for frequency and time synchronization correction and UE mobility management. In addition, the UE may receive and use satellite location and mobility information from a base station connected to the satellite through system information block (SIB) information included in a broadcasting message.

Meanwhile, in the case of a terrestrial network (TN), communication from UEs to the core network (CN) may be performed through a cellular network installed and managed by the communication operator. Therefore, all communication networks may be managed by servers of the communication operator. In general, servers of the communication operator may be designed according to 3GPP standards. In contrast, in the case of wireless communication using a non-terrestrial network, some sections of the communication path from the UE to the CN include networks other than the communication operator's network. For example, between base stations and UEs, non-terrestrial network communication nodes (or NTN network entities (NTN NE)) may exist, such as NTN gateways and satellites, high-altitude platform stations (HAPS), urban air mobility (UAM), and drones.

Communication nodes (or entities) of a non-terrestrial network may be managed by a management server of the communication operator or by a separate system managed by an entity other than the communication operator (e.g., an entity that manages a satellite network). If communication nodes of a non-terrestrial network are managed by an entity other than the communication operator that manages the terrestrial network, it is difficult to manage the non-terrestrial network section by the core network. Therefore, there is a need for interworking between a management system for managing sections configured by a non-terrestrial network and the system of the terrestrial network. Therefore, for interworking between the non-terrestrial network management system and the system of the non-terrestrial network, the central unit (CU) of a base station may receive mobility information (e.g., orbit information) of a non-terrestrial network communication node (e.g., a satellite) from an external non-terrestrial network system management service (or server) that constructs and manages the non-terrestrial network system, may calculate the orbit based on the information, and may calculate the current location and velocity of the non-terrestrial network communication node and use the same. In addition, the base station may select a satellite interworking with the base station, and may form a cell based on the selected satellite.

However, in case that thousands of satellites revolve around the Earth, thereby increasing the number of connectable satellites to dozens to hundreds, and satellites dynamically form cells using rotatable antennas, base stations need to process orbital information regarding numerous satellites, and need to continuously receive information regarding the cell formation method and state from external non-terrestrial network management servers. In addition, various devices that may be considered as non-terrestrial network communication nodes, such as high-altitude platform stations (HAPS), urban air mobility (UAM), or drones have no fixed orbit, unlike satellites, and base stations thus need to receive path information at a predetermined interval through external non-terrestrial network management servers, and need to receive a larger amount of data at a higher frequency than satellites. However, no signaling method for exchanging such information has been defined in the prior art, and the operation and management (OAM) in the management plane needs to receive the information from an external non-terrestrial network management server and transfer the same to a base station. However, the OAM and the external non-terrestrial network management server transmit/receive information through a public network in this case, and it is difficult to guarantee the performance of the transmission/reception network between the OAM and the base station. Consequently, information transmission/reception may be delayed, and UE operations for accessing the non-terrestrial network cell (e.g., initial access or handover) may be delayed.

The above-described problems have a greater influence on communication quality as the size of data capacity including information is larger, the stability (e.g., retransmission rate, packet drop rate, etc.) of the information transfer path is lower, and the distance of the information transfer path is longer. There is a need for a technology for improving this.

An aspect of the disclosure may be to provide a method and a device for transferring information regarding a non-terrestrial network communication node in a wireless communication system using a non-terrestrial network.

Another aspect of the disclosure may be to provide a method and a device for efficiently transferring information by storing or managing, and reusing information regarding a non-terrestrial network communication node.

Another aspect of the disclosure may be to provide a method and a device for efficiently transferring information by transferring information regarding a non-terrestrial communication node between base stations.

Another aspect of the disclosure may be to provide minimizing the delay time by transferring information regarding a non-terrestrial network communication node through a control plane.

### [Solution to Problem]

A method for operating a first network entity (NTN management function (NMF)) in a wireless communication system according to an embodiment of the disclosure includes: identifying that a non-terrestrial network communication node connected to a first base station is changed from a first node to a second node; determining whether information regarding the second node is stored; and transmitting information regarding the second node to the first base station, based on whether information regarding the second node is stored.

### [Advantageous Effects of Invention]

A method and a device according to an embodiment of the disclosure may efficiently transfer information by storing or managing, and reusing information regarding a non-terrestrial network communication node in a wireless communication system (e.g., a 5G NR system).

In addition, the method and device according to an embodiment of the disclosure may efficiently transfer information even if the CN and the base station are located at a long distance therebetween, by transferring information regarding the non-terrestrial network communication node between base stations.

In addition, the method and device according to an embodiment of the disclosure may minimize the delay time and improve reliability of information transmission by transferring information regarding the non-terrestrial communication node through a control plane.

In addition, the method and device according to an embodiment of the disclosure may efficiently transfer information regarding a non-terrestrial network communication node such that the base station broadcasts changed system information block (SIB) information, and the UE can access the non-terrestrial network cell based on the changed SIB information, thereby improving the quality of wireless communication using non-terrestrial networks.

Advantageous effects obtainable from the disclosure are not limited to the above-mentioned effects, and other effects which are not mentioned herein may be clearly understood from the following description by those skilled in the art to which the disclosure pertains.

### [Brief Description of Drawings]

The features and advantages of an embodiment of the disclosure will be more apparent from the following description in conjunction with the accompanying drawings.
FIG. 1A is a diagram for describing a quasi-Earth fixed cell according to an embodiment of the disclosure.
FIG. 1B is a diagram for describing an Earth moving cell according to an embodiment of the disclosure.
FIG. 2A and FIG. 2B illustrate a system in which a terrestrial network and a non-terrestrial network interwork according to an embodiment of the disclosure.
FIG. 3 illustrates a system in which a terrestrial network and a non-terrestrial network interwork according to an embodiment of the disclosure.
FIG. 4 illustrates a system in which a terrestrial network and a non-terrestrial network interwork according to an embodiment of the disclosure.
FIG. 5 illustrates a system for transferring information regarding a non-terrestrial network communication node according to an embodiment of the disclosure.
FIG. 6 illustrates an information transfer method according to an embodiment of the disclosure.
FIG. 7 illustrates an information transfer method according to an embodiment of the disclosure.
FIG. 8 is a diagram illustrating a system for transferring information regarding a non-terrestrial network communication node according to an embodiment of the disclosure.
FIG. 9 illustrates an information transfer method according to an embodiment of the disclosure.
FIG. 10 illustrates a system for transferring information regarding a non-terrestrial network communication node according to an embodiment of the disclosure.
FIG. 11 illustrates an information transfer method according to an embodiment of the disclosure.
FIG. 12 illustrates an information transfer method according to an embodiment of the disclosure.
FIG. 13 illustrates a system for transferring information regarding a non-terrestrial network communication node according to an embodiment of the disclosure.
FIG. 14 illustrates an information transfer method according to an embodiment of the disclosure.
FIG. 15 illustrates an information transfer method according to an embodiment of the disclosure.
FIG. 16 illustrates an information transfer method according to an embodiment of the disclosure.
FIG. 17 illustrates components of a network entity according to an embodiment of the disclosure.
FIG. 18 illustrates components of a base station according to an embodiment of the disclosure.

### [Mode for the Invention]

Embodiments of the disclosure may resolve the above-mentioned problems and/or disadvantages and provide advantages as described below. An aspect of the disclosure may provide a network entity (or node) and a communication method thereof in a wireless communication system.

The terms used in the disclosure are used merely to describe particular embodiments, and may not be intended to limit the scope of other embodiments. Expressions in the singular may include expressions in the plural unless the context clearly indicates otherwise. The terms used herein, including technical and scientific terms, may have the same meaning as those commonly understood by a person skilled in the art to which the disclosure pertains. Such terms as those defined in a generally used dictionary may be interpreted to have the meanings equal to the contextual meanings in the relevant field of art, and are not to be interpreted to have ideal or excessively formal meanings unless clearly defined in the disclosure. In some cases, even the term defined in the disclosure should not be interpreted to exclude embodiments of the disclosure.

Hereinafter, various embodiments of the disclosure will be described based on an approach of hardware. However, various embodiments of the disclosure include a technology that uses both hardware and software, and thus the various embodiments of the disclosure may not exclude the perspective of software.

Furthermore, various embodiments of the disclosure will be described using terms employed in some communication standards (e.g., the 3rd generation partnership project (3GPP)), but they are for illustrative purposes only. Various embodiments of the disclosure may also be easily applied to other communication systems through modifications.

Hereinafter, various embodiments of the disclosure will be described.

According to embodiments of the disclosure, in communication using a non-terrestrial network, cells formed by satellites may be classified into 1) earth fixed cells, 2) quasi-earth fixed cells, and 3) earth moving cells according to the satellite operating method.

An earth fixed cell refers to a cell having a fixed location, and the location thereof may be fixed by a GEO satellite having the same orbital period as the Earth's rotation period. A GEO satellite refers to a satellite that is always floating above with reference to a specific location on the Earth surface. Therefore, the GEO satellite may form a cell, the location of which is fixed at a specific location on the Earth surface.

A quasi-earth fixed cell and an earth moving cell refer to cells formed by a satellite, such as a MEO or LEO, the orbital period of which is not identical to the Earth's rotation period.

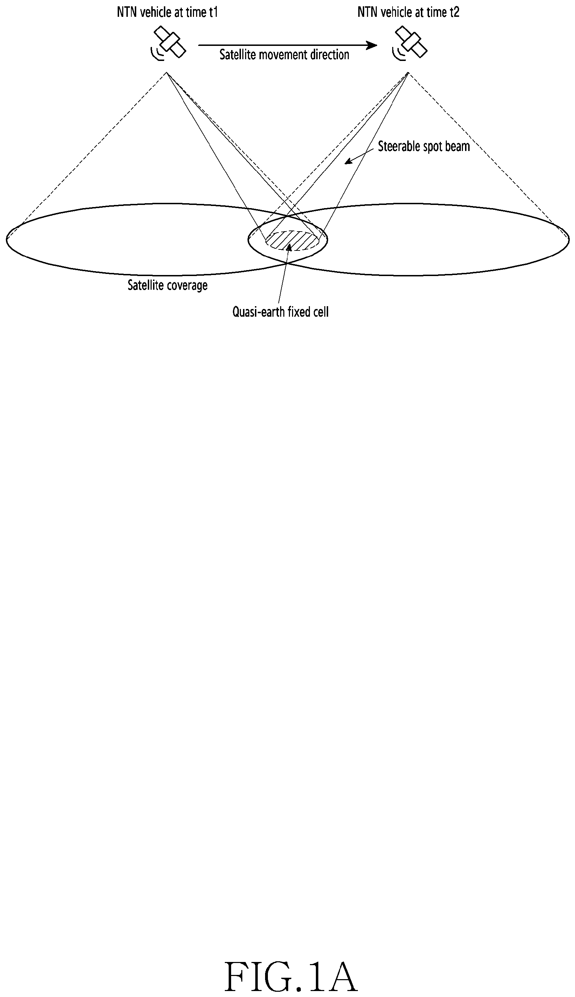

FIG. 1A is a diagram for describing a quasi-earth fixed cell according to an embodiment of the disclosure.

Referring to FIG. 1A, the quasi-earth fixed cell may refer to a cell formed by a satellite, such as a MEO or LEO, the orbital period of which is different from the Earth's rotation period, such that the cell has a fixed location in an area on the Earth surface. However, in order to operate such a fixed cell, the satellite forming the cell may be changed.

A satellite, such as a MEO or LEO, the orbital period of which is different from the Earth's rotation period, will appear to move with respect to a specific location on the Earth surface. Therefore, in order to form a cell having a fixed location in a specific area on the Earth surface, the satellite may rotate an antenna while moving. That is, the satellite may rotate the beam antenna to form a cell at a fixed location. However, if the satellite continues to move until no cell can be formed at the same location even at the maximum rotation angle, another satellite nearby may form a cell at the same location. As such, in the case of a quasi-earth fixed cell, the cell-forming satellite may be changed to operate a cell at the same location on the Earth surface.

FIG. 1A illustrates an area covered by a satellite (NTN vehicle) at time t1 and an area covered by the satellite at time t2, the satellite is in motion to the right. In such an environment, in the case of a cell formed within the satellite's coverage area, the satellite may adjust the antenna direction to continuously form the cell in the area as long as the cell is located within the satellite's coverage area. If the area deviates from the satellite's coverage area as a result of the satellite's continued movement (that is, if no cell can be formed in the area even if the satellite's antenna is rotated to the maximum rotation angle), a cell may be formed at the same location in the area by another satellite in the coverage area. Therefore, the cell may have a fixed location by means of a satellite change, and a quasi-earth fixed cell may refer to a cell, the location of which is fixed in such a method.

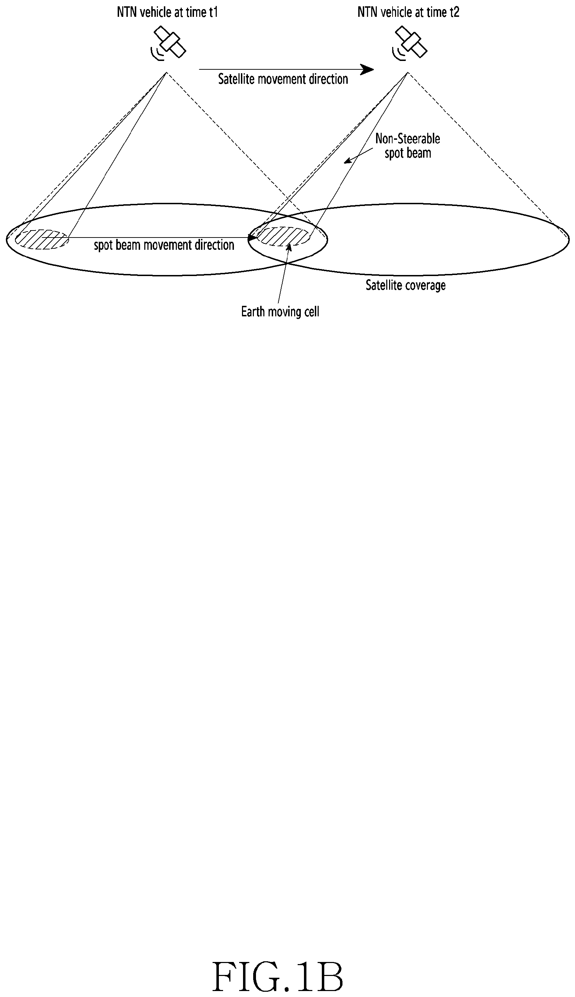

FIG. 1B is a diagram for describing an Earth moving cell according to an embodiment of the disclosure.

An earth moving cell refers to a cell the location of which changed by the movement of a satellite which cannot rotate its antenna, such as in a MEO or LEO satellite, in an environment where the rotation speed of the Earth and the orbital speed of the satellite differ.

FIG. 1B illustrates the location of the satellite (NTN vehicle) at time t1 and the location of the satellite at time t2. The satellite has moved to the right in the drawing during time t2 - t1. The location of the cell formed by the satellite at time t1 is changed as much as the distance of movement of the satellite. FIG. 1B shows an Earth moving cell, the location of which is changed by the satellite's movement.

Although FIG. 1A and FIG. 1B describe cells formed by satellites, cells described in the disclosure may be formed not only be satellites, but also by various communication node devices available for non-terrestrial network communication, such as HAPS, UAM, and drones.

Meanwhile, satellites used for non-terrestrial network communication may be classified into 1) a transparent payload and 2) a regenerative payload, according to the function thereof.

The transparent payload refers to a satellite equipped with a signal amplification function and/or a frequency conversion function so that the satellite may transfer signals to the ground without processing the same like a reflector or a repeater. In this case, the satellite does not include functions of a base station, such as a distributed unit (DU) or a central unit (CU).

The regenerative payload may be referred to as an on-board processing (OBP) payload, and the satellite may be equipped with a processor capable of processing data so that the satellite may play the role of a base station, such as a DU or a CU.

Embodiments according to the disclosure may be applied not only to a transparent payload satellite, but also to a regenerative payload satellite. The regenerative payload satellite may be equipped with a DU, and the CU may exist on the ground. In addition, in an embodiment, the regenerative payload satellite may be equipped with a DU and a CU.

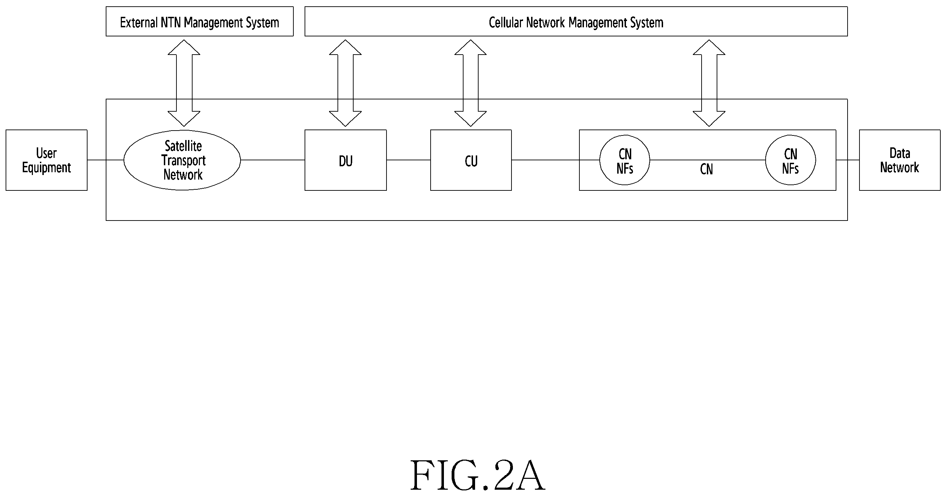

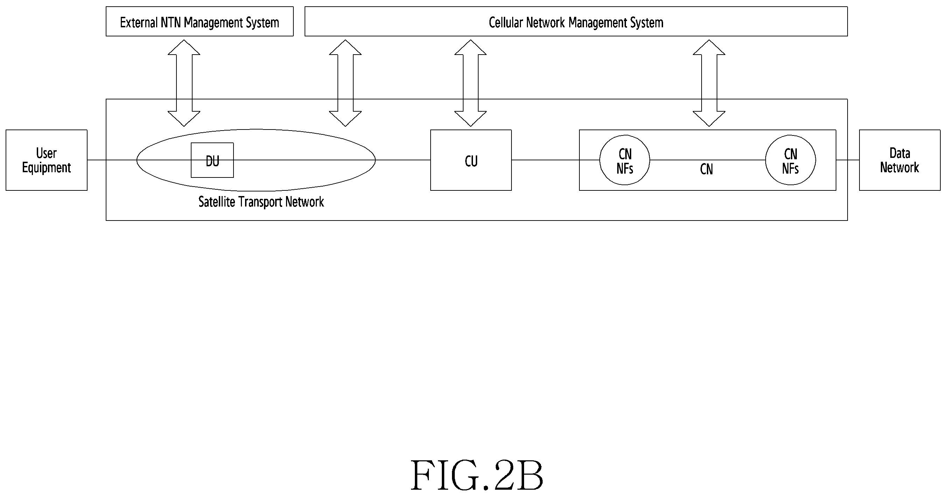

FIG. 2A and FIG. 2B illustrate a system in which a terrestrial network and a non-terrestrial network interwork according to an embodiment of the disclosure. Wireless communication using a non-terrestrial network may be configured by combining a non-terrestrial network (e.g., a satellite communication network) and a terrestrial network. This is because the terrestrial network and the non-terrestrial network are both utilized in communication between a UE and a server.

The non-terrestrial network (e.g., a satellite communication network) and the terrestrial network may be operated in a scheme 1) in which the terrestrial network (e.g., a mobile communication network) and the non-terrestrial network are integrated, or in a scheme 2) in which the non-terrestrial network and the terrestrial network are separately operated by different entities while cooperating with each other.

In the scheme in which a terrestrial network and a non-terrestrial network are integrated, a 3GPP core network (CN) may access and manage both a terrestrial base station and a non-terrestrial communication node (e.g., a satellite, a HAPS, etc.).

In the scheme in which a non-terrestrial network and a terrestrial network are separately operated by different entities while cooperating with each other, the non-terrestrial network is accessed and managed by a non-terrestrial network management system (e.g., a satellite network management system) that installs or manages the non-terrestrial network, and the terrestrial network is accessed and managed by a 3GPP CN. In addition, the non-terrestrial network management system (e.g., a satellite network management system) and the CN of the terrestrial network (e.g., a mobile communication network) may interwork to exchange information between respective systems as needed, while operating independently of each other.

FIG. 2A and FIG. 2B illustrate a scheme in which a non-terrestrial network and a terrestrial network are separately operated (or managed) by different entities, but may cooperate with each other. FIG. 2A illustrates a system in which terrestrial network and a non-terrestrial network using a transparent payload satellite interwork, and FIG. 2B illustrates a system in which terrestrial network and a non-terrestrial network using a regenerative payload satellite interwork.

Referring to FIG. 2A, the terrestrial network is configured by a base station (DU and CU) and a core network (CN), and the non-terrestrial network is configured by a satellite transport network. The terrestrial network may be operated or managed by a cellular network management system, and the non-terrestrial network may be operated or managed by an external NTN management system. Information may be exchanged between the terrestrial network and the non-terrestrial network through coordination between the cellular network management system and the external NTN management system. Therefore, the exchanged information may be transferred to the network function (NF) of CN or the base station and used.

Referring to FIG. 2B, the terrestrial network is configured by a base station (CU) and a core network (CN), and the non-terrestrial network is configured by a satellite transport network. In case that the non-terrestrial network's communication node is a regenerative payload satellite, the regenerative payload satellite may be equipped with a distributed unit (DU). The terrestrial network may be operated or managed by a cellular network management system, and the non-terrestrial network may be operated or managed by an external NTN management system. In addition, since the regenerative payload satellite includes a DU, a part of the non-terrestrial network may be operated or managed by the cellular network management system.

Information may be exchanged between the terrestrial network and the non-terrestrial network through coordination between the cellular network management system and the external NTN management system. Therefore, the exchanged information may be transferred to the network function (NF) of the CN or the base station and used.

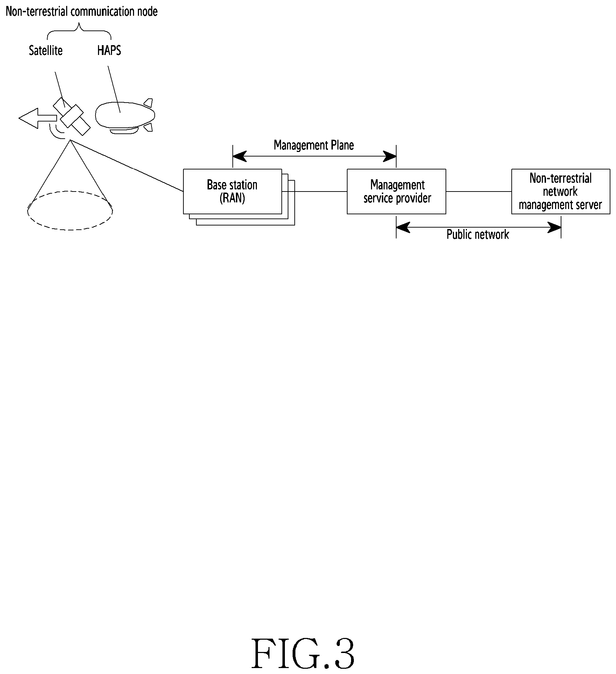

FIG. 3 illustrates a system in which a terrestrial network and a non-terrestrial network interwork according to an embodiment of the disclosure.

FIG. 3 may illustrate a process of transfer of information regarding a non-terrestrial network communication node in a system as in FIG. 2A and FIG. 2B. The non-terrestrial network management server of FIG. 3 may correspond to the external NTN management system of FIG. 2A and FIG. 2B. In addition, the management service provider of FIG. 3 may correspond to the cellular network management system of FIG. 2A and FIG. 2B.

Referring to FIG. 3, in case that the non-terrestrial network communication node is changed according to the cell operating scheme of the non-terrestrial network, the non-terrestrial network management server may transmit relevant information to a management service provider, and the management service provider may transmit the information to the base station. Therefore, the base station may generate system information block information, based on the updated information, and may broadcast the same such that the UE uses the information.

However, in the conventional technology, there was a high possibility of network congestion and transmission/reception delay during information transmission/reception between the non-terrestrial network management server and the management service provider, since a public network was used. In addition, since information is transmitted/received between the management service provider and the base station (RAN) based on a management plane, there is a problem in that the reliability is low compared to that based on a user plane or a control plane.

Embodiments according to the disclosure relate to a method and a device for solving such problems.

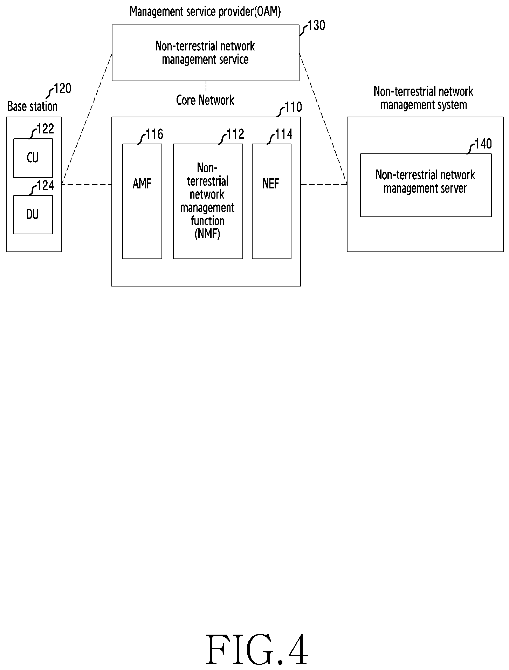

FIG. 4 illustrates a system in which a terrestrial network and a non-terrestrial network interwork according to an embodiment of the disclosure.

Referring to FIG. 4, the system according to an embodiment may include a core network (CN) 110, a base station 120, a management service provider (OAM) 1330, and a non-terrestrial network (NTN) management server 140.

The management service provider 130 may store or manage information necessary for SIB information modification in the OAM/CN. The non-terrestrial network management server 140 may trigger SIB information modification through the control plane of the base station 120 and the core network (CN) 110, and may transmit/receive information necessary for the information modification. In addition, the non-terrestrial network management server 140 may trigger SIB information modification through the management plane of the base station 120 and the management service provider (OAM) 130, and may transmit/receive information necessary for the information modification. The base station 120 may transmit/receive information necessary for SIB information modification with other base stations.

The NTN management function (NMF) 112 includes a function for confirming whether information (orbital and mobility information of the NTN communication node, etc.) required for SIB modification is stored in the storage (memory) inside the NMF 112, in a storage network function (NF) (e.g., UDN) inside the CN that is communicable with the NMF 112, or in a CU that is communicable with the NMF 112. In addition, the NMF 112 may include a function of confirming whether information necessary during SIB modification is usable without being updated.

Signaling between the non-terrestrial network management server 140 and the base station 120 may include signaling that occurs when the non-terrestrial network management server 140 notifies the non-terrestrial network management function (NMF) of a non-terrestrial network change and receives an ACK, when the non-terrestrial network management server 140 transfers necessary information to the management service provider (OAM) 130 and receives an ACK, when the non-terrestrial network management server 140 transfers information necessary for SIB modification to the corresponding base station 120 and receives an ACK, when the non-terrestrial network management server 140 requests another base station 120 that stores information necessary for SIB modification to transfer the information to the target base station and receives an ACK, and signaling that occurs when corresponding information is exchanged between base stations.

Information regarding the cell or the non-terrestrial communication node generated by the non-terrestrial network management server 140 may be transferred to a base station through the core network 110 or the management service provider (OAM). The base station may include a central unit (CU) and a distributed unit (DU), and the CU of the base station may generate system information block (SIB) information, based on the transferred information. The base station may transmit a broadcasting message including SIB information, and the UE may access the non-terrestrial network cell, based on the SIB information received from the base station.

The SIB information included in the broadcasting message may include various pieces of information, such as the identifier, location information, velocity information, and/or orbit information of a non-terrestrial network communication node (e.g., a satellite), and information related to the cell formed by the satellite.

In an embodiment, the SIB information may include an information element (IE) including orbit information, location information, and velocity information of a non-terrestrial network communication node (e.g., a satellite) connected to a base station, and may further include information (e.g., the cell center location and diameter, and neighboring satellite cell information) related to the satellite's cell operation. Tables 1 and 2 below show the IE of SIB information and information included in the NTN configuration information (e.g., NTN-Config).

**[Table 1]**

| | **SIB19 field descriptions** |
|---|---|
| **ntn-Config** | |

Provides parameters needed for the UE to access NR via NTN access such as Ephemeris data, common TA parameters, k_offset, validity duration for UL sync information and epoch.

### ntn-NeighCellConfigList, ntn-NeighCellConfigListExt

Provides a list of NTN neighbour cells including their ntn-Config, carrier frequency and PhysCellId. This set includes all elements of ntn-NeighCellConfigList and all elements of ntn-NeighCellConfigListExt. If ntn-Config is absent for an entry in ntn-NeighCellConfigListExt, the ntn-Config provided in the entry at the same position in ntn-NeighCellConfigList applies.

The Ntn-Config may include parameters for the UE to access the NR via a non-terrestrial network, as non-terrestrial network configuration information. Ephemeris data, common TA parameters, k_offset, validity duration for UL sync information and epoch.

The Ntn-NeighCellConfigList may provide a list of non-terrestrial network neighbor cells, and may include non-terrestrial network configuration information (ntn-Config), carrier frequency information, cell identifier information, etc.

**[Table 2]**

| **NTN-Config field descriptions** |
|---|
| **EphemerisInfo** |
| This field provides satellite ephemeris either in format of position and velocity state vector or in format of orbital parameters. This field is excluded when determining changes in system information, i.e. changes to ephemerisInfo should neither result in system information change notifications nor in a modification of valueTag in SIB1. |
| **ta-Common** |
| Network-controlled common timing advanced value and it may include any timing offset considered necessary bv the network. ta-Common with value of 0 is |
| supported. The granularity of ta-Common is 4.072 × 10^(-3) µs. Values are given in unit of corresponding granularity. This field is excluded when determining changes in system information, i.e. changes of ta-Common should neither result in system information change notifications nor in a modification of valueTag in SIB1. |
| **ta-CommonDrift** |
| Indicate drift rate of the common TA. The granularity of ta-CommonDrift is 0.2 × 10^(-3) µs/s. Values are given in unit of corresponding granularity. This field is excluded when determining changes in system information, i.e. changes of ta-CommonDrift should neither result in system information change notifications nor in a modification of valueTag in SIB1. |
| **ta-CommonDriftVariant** |
| Indicate drift rate variation of the common TA. The granularity of ta-CommonDriftVariation is 0.2×10^(-4) µs/s^2. Values are given in unit of corresponding granularity. This field is excluded when determining changes in system information, i.e. changes of ta-CommonDriftVariant should neither result in system information change notifications nor in a modification of valueTag in SIB1. |

The EphemerisInfo may provide parameters indicating the location information, velocity information, and orbit information of the non-terrestrial network communication node (e.g., satellite).

The core network 110 may include an access & mobility management function (AMF), a non-terrestrial network management function (NMF), and/or a network exposure function (NEF).

The NMF 112 may receive information regarding a non-terrestrial communication node from the non-terrestrial network management server 140, and may determine whether a non-terrestrial communication node connected to a specific base station has been changed. In addition, the NMF 112 may determine whether information related to received information is stored in the internal memory thereof or in other network functions (e.g., UDR, UDM) of the core network 110. In addition, the NMF 112 may determine whether information related to received information is stored in the base station.

The NEF 114 and the AMF 116 may be understood as network functions (NFs) described in 3GPP standards, and may be understood as network functions used to transfer information from the non-terrestrial network management server 140 to the core network 110 and to transfer information from the core network 110 to the base station 120.

Although descriptions of various network functions that may be included in the core network 110 are omitted in the disclosure, the core network 110 may include other network functions in addition to the AMF 116 and the NEF 114, and information regarding the non-terrestrial communication node may be transferred via other network functions.

In an embodiment, information regarding the non-terrestrial network communication node may be transferred between the base station 120, the core network 110, and the non-terrestrial network management server 140 through the NEF 114 or the AMF 116.

In addition, in an embodiment, information regarding the non-terrestrial network communication node may be transferred from the non-terrestrial network management server 140 to the NMF 112 directly, without passing through the NEF 114 or the AMF 116, or may be transmitted directly from the NMF 112 to the base station 120.

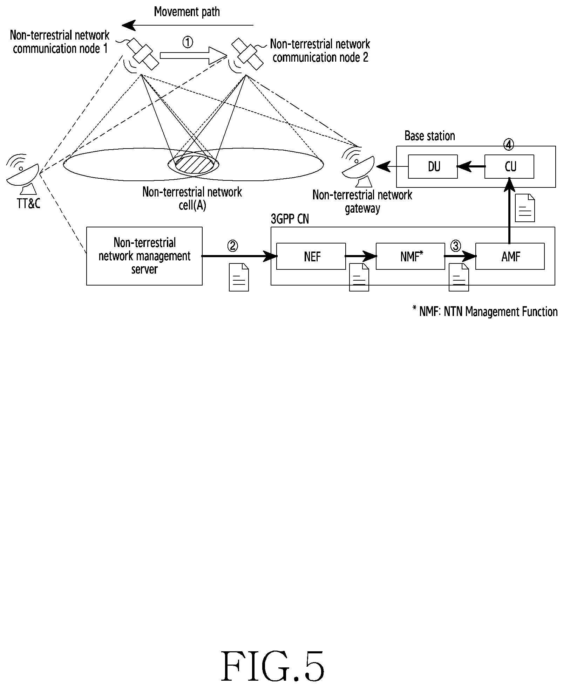

FIG. 5 illustrates a system for transferring information regarding a non-terrestrial communication node according to an embodiment of the disclosure.

FIG. 5 illustrates a system for transferring information regarding a non-terrestrial network communication node in case that the non-terrestrial network communication node connected to the base station is changed from non-terrestrial network communication node 1 to non-terrestrial network communication node 2, according to a quasi-earth fixed cell operation scheme.

Non-terrestrial network communication node 1 may form cell A at the same location while rotating the antenna during a movement. In case that non-terrestrial network communication node 1 continues to move and cannot form cell A at the same location, non-terrestrial network communication node 2 capable of forming cell A at the location may form cell A. Therefore, the non-terrestrial network communication node connected to the base station may be changed by the non-terrestrial network management system from non-terrestrial network communication node 1 to non-terrestrial network communication node 2 (①).

The non-terrestrial network management server may transmit information regarding non-terrestrial network communication node 2 connected to the base station to the core network (②).

Information regarding non-terrestrial communication node 2 may be transferred from the NEF of the core network to the NMF, and then transferred from the NMF to the AMF (③). In addition, information regarding non-terrestrial network communication node 2 may be transmitted to the CU of the base station through the AMF (④).

The CU of the base station may update the SIB information, based on the received information, and may transmit a broadcasting message including the updated SIB information to the UE, and the UE may access the cell (A) formed by non-terrestrial network communication node 2, based on the SIB information included in the received message.

The non-terrestrial network management server may transmit information necessary for the SIB IE change among the information regarding the changed non-terrestrial network communication node to the NMF of the core network (notification w/ or w/o orbital info). In addition, the NMF may transfer the information to the CU of the base station through a control plane (CP) interface which can transfer the same to the CU of the base station, and the CU may receive the information, update the IE in the SIB to the received information, and broadcast the same.

The information transfer method according to an embodiment described with reference to FIG. 5 may improve the reliability and speed of information transfer by transferring information to the base station through the control plane of the core network, not through a management plane.

The non-terrestrial network management server, network functions of the core network, and the base station illustrated in FIG. 5 may correspond to components of the system illustrated in FIG. 4.

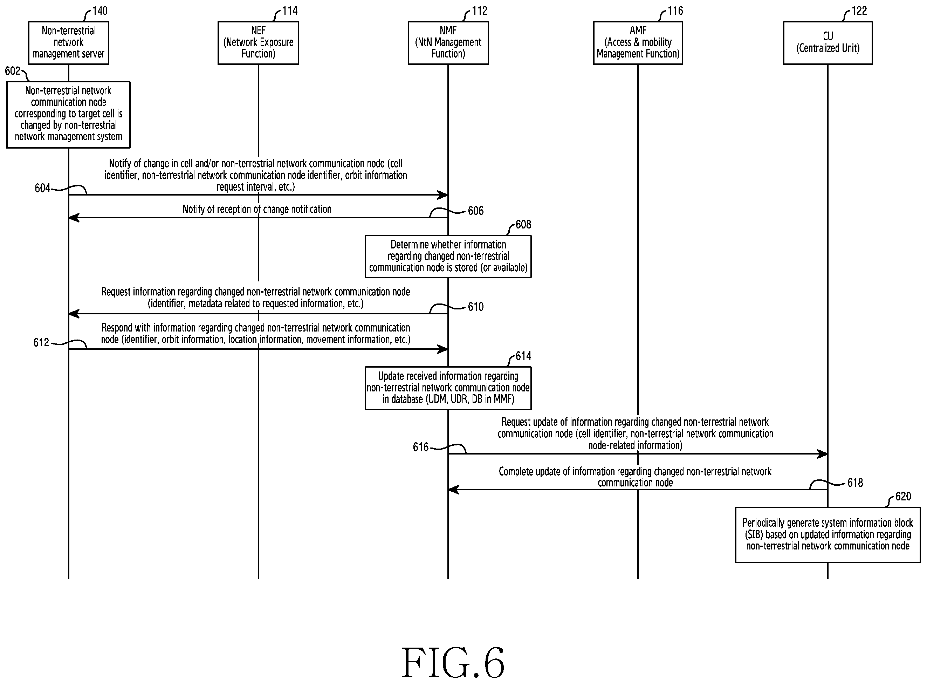

FIG. 6 illustrates an information transfer method according to an embodiment of the disclosure.

FIG. 6 may illustrate operations of the components described with reference to FIG. 4 in the non-terrestrial network communication node changing situation described with reference to FIG. 5.

In operation 602, the non-terrestrial network management server 140 recognizes that the non-terrestrial network communication node corresponding to the target cell is changed by the non-terrestrial network management system. Operation 602 may be an operation of recognizing that the non-terrestrial communication node connected to the base station is changed.

In operation 604, the non-terrestrial network management server 140 notifies of a change in the cell and/or non-terrestrial network communication node. In operation 604, the non-terrestrial network management server 140 may transmit at least one of the cell identifier (e.g., physical cell ID (PID)), the identifier of the non-terrestrial network communication node, the location information, velocity information, and orbit information of the non-terrestrial network communication node, and the validity period of the information to the NMF 112. Such notifications and information may be transferred from the non-terrestrial network management server 140 to the NMF 112 through the NEF 114, or may be transferred directly from the non-terrestrial network management server 140 to the NMF 112. In addition, the notification message may include minimum information enabling the NMF 112 to identify the changed non-terrestrial network communication node. The NMF 112 may determine whether there is an entity (network function, base station, or the like) storing necessary information through minimum information, before requesting all information necessary with regard to the changed non-terrestrial communication node from the non-terrestrial network management server 140. Therefore, the size of data transmitted/received between the non-terrestrial network management server 140 and the NMF 112 may be reduced.

In operation 606, the NMF 112 notifies the non-terrestrial network management server 140 of reception of the change notification and/or related information received in operation 604. Such a notification may be transferred to the non-terrestrial network management server 140 through the NEF 114, or may be directly transmitted to the non-terrestrial network management server 140 from the NMF 112.

In operation 608, the NMF 112 determines whether information regarding the changed non-terrestrial communication node is stored or available. In operation 608, the NMF 112 may determine whether information regarding the non-terrestrial communication node is stored (or available) in its own memory, or whether information regarding the non-terrestrial communication node is stored (or available) in a network function of the core network (e.g., a network function including a database capable of storing information regarding the non-terrestrial communication node, such as a UDM or UDR). In operation 608, whether the information is available may be determined based on the validity period of information regarding the non-terrestrial communication node.

In operation 610, in case of determining that no information regarding the changed non-terrestrial network communication node is stored (or determining that no information is available) in operation 608, the NMF 112 requests the non-terrestrial network management server 140 to provide information regarding the changed non-terrestrial network communication node. The request may include the identifier of the changed non-terrestrial communication node and/or metadata related to the requested information.

In operation 612, the non-terrestrial network management server 140 transmits information regarding the changed non-terrestrial network communication node to the NMF 112 in response to the request in operation 610. In operation 610, information may be transferred through the NEF 114, or may be directly transferred from the non-terrestrial network management server 140 to the NMF 112. The information regarding the changed non-terrestrial communication node may include all information necessary for the base station 122 to change the IE of the SIB (e.g., the identifier, location information, velocity information, orbit information of the non-terrestrial communication node, and the like).

In operation 614, the NMF 112 updates (or stores) information regarding the non-terrestrial network communication node received by operation 612. The NMF 112 may update (or store) information regarding the non-terrestrial communication node in its own memory, or may update (or store) information regarding the non-terrestrial communication node in a network function of the core network (e.g., a network function including a database capable of storing information of the non-terrestrial communication nodes, such as a UDM or UDR).

In operation 616, the NMF 112 requests the base station's CU 122 to update information regarding the changed non-terrestrial communication node. The request includes information regarding the changed non-terrestrial communication node. In addition, in operation 616, the request message may be transferred to the CU 122 through the AMF 116 or may be directly transferred from the NMF 112 to the CU 122.

In operation 618, the CU 122 transfers a notification to the NMF 112 to indicate completed update of information regarding the changed non-terrestrial network communication node. The notification may be transferred to the NMF 112 through the AMF 116, or may be directly transferred from the CU 122 to the NMF 112.

In operation 620, the CU 122 of the base station generates a system information block based on updated information regarding the non-terrestrial communication node. The CU 122 may periodically generate a system information block.

Although not illustrated in FIG. 6, after operation 620, the base station may transmit updated information regarding the non-terrestrial communication node to the UE, and the UE may access the cell of the changed non-terrestrial communication node, based on the received information, and perform communication with the base station.

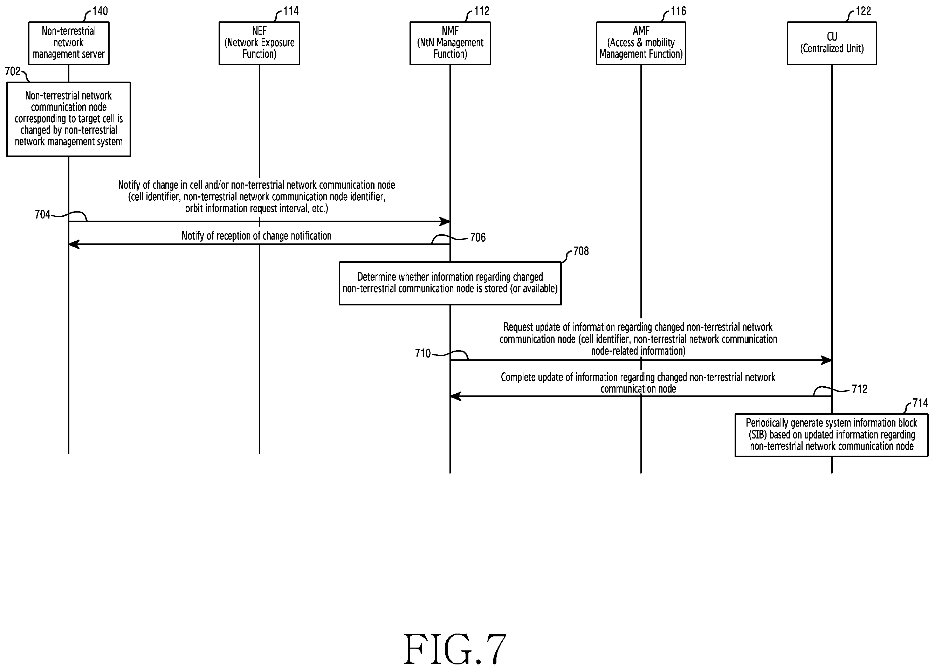

FIG. 7 illustrates an information transfer method according to an embodiment of the disclosure.

FIG. 7 illustrates an information transfer method in case that information regarding a changed non-terrestrial communication node is stored in a network function of a core network.

FIG. 7 may illustrate operations of the components described with reference to FIG. 4 in the non-terrestrial network communication node changing situation described with reference to FIG. 5.

In operation 702, the non-terrestrial network management server 140 recognizes that the non-terrestrial network communication node corresponding to the target cell is changed by the non-terrestrial network management system. Operation 702 may be an operation of recognizing that the non-terrestrial communication node connected to the base station is changed.

In operation 704, the non-terrestrial network management server 140 notifies of a change in the cell and/or non-terrestrial network communication node. In operation 704, the non-terrestrial network management server 140 may transmit at least one of the cell identifier, the identifier of the non-terrestrial network communication node, the location information, velocity information, and orbit information of the non-terrestrial network communication node to the NMF 112. Such notifications and information may be transferred from the non-terrestrial network management server 140 to the NMF 112 through the NEF 114, or may be transferred directly from the non-terrestrial network management server 140 to the NMF 112. In addition, the notification message may include minimum information enabling the NMF 112 to identify the changed non-terrestrial network communication node. The NMF 112 may determine whether there is an entity (network function, base station, or the like) storing necessary information through minimum information, before requesting all information necessary with regard to the changed non-terrestrial communication node from the non-terrestrial network management server 140. Therefore, the size of data transmitted/received between the non-terrestrial network management server 140 and the NMF 112 may be reduced.

In operation 706, the NMF 112 notifies the non-terrestrial network management server 140 of reception of the change notification and/or related information received in operation 704. Such a notification may be transferred to the non-terrestrial network management server 140 through the NEF 114, or may be directly transmitted to the non-terrestrial network management server 140 from the NMF 112.

In operation 708, the NMF 112 determines whether information regarding the changed non-terrestrial communication node is stored or available. In operation 708, the NMF 112 may determine whether information regarding the non-terrestrial communication node is stored (or available) in its own memory, or whether information regarding the non-terrestrial communication node is stored (or available) in a network function of the core network (e.g., a network function including a database capable of storing information regarding the non-terrestrial communication node, such as a UDM or UDR). In addition, the NMF 112 may determine whether information regarding the non-terrestrial communication node is stored (or available) in other base station. In operation 708, whether the information is available may be determined based on the validity period of information regarding the non-terrestrial communication node.

In operation 710, in case of determining that information regarding the changed non-terrestrial network communication node is stored (or determining that information is available) in operation 708, the NMF 112 requests the CU 122 to update information regarding the changed non-terrestrial network communication node. The request may include information regarding the changed non-terrestrial network communication node. In operation 710, the request message may be transferred to the CU 122 through the AMF 116, or may be directly transferred from the NMF 112 to the CU 122. The information regarding the changed non-terrestrial network communication node included in the request may include all information necessary for the base station 122 to change the IE of the SIB (e.g., the identifier, location information, velocity information, orbit information of the non-terrestrial communication node, and the like).

In operation 712, the CU 122 transfers a notification to the NMF 112 to notify the same of completed update of information regarding the changed non-terrestrial network communication node. The notification may be transferred to the NMF 112 through the AMF 116, or may be directly transferred from the CU 122 to the NMF 112.

In operation 714, the CU 122 of the base station generates a system information block based on updated information regarding the non-terrestrial communication node. The CU 122 may periodically generate a system information block.

Although not illustrated in FIG. 7, after operation 714, the base station may transmit updated information regarding the non-terrestrial communication node to the UE, and the UE may access the cell of the changed non-terrestrial communication node, based on the received information, and perform communication with the base station.

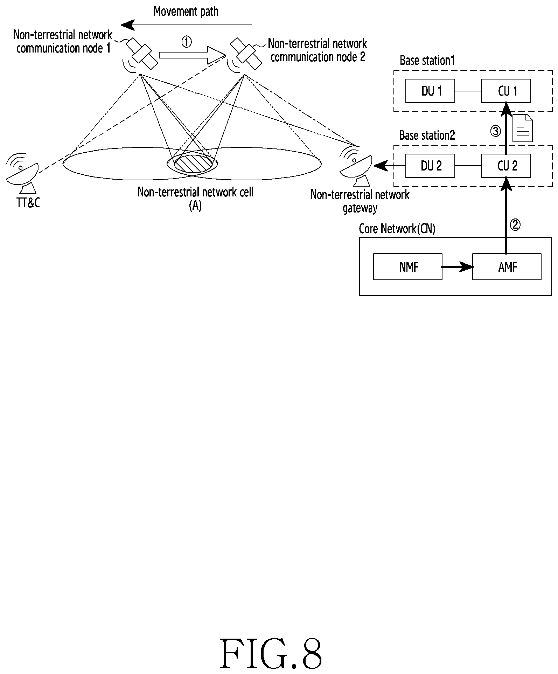

FIG. 8 illustrates a system for transferring information regarding a non-terrestrial network communication node according to an embodiment of the disclosure.

FIG. 8 illustrates a system for transferring information regarding a non-terrestrial network communication node in case that the non-terrestrial network communication node connected to the base station is changed from non-terrestrial network communication node 1 to non-terrestrial network communication node 2 according to the quasi-earth fixed cell operation scheme.

Non-terrestrial network communication node 1 may form cell A at the same location while rotating the antenna during a movement. In case that non-terrestrial network communication node 1 continues to move and cannot form cell A at the same location even if the antenna is rotated to the maximum angle, non-terrestrial network communication node 2 capable of forming cell A at the location may form cell A. Therefore, the non-terrestrial network communication node connected to base station 1 may be changed by the non-terrestrial network management system from non-terrestrial network communication node 1 to non-terrestrial network communication node 2 (①).

In FIG. 8, the NMF may determine whether information regarding non-terrestrial communication node 2 is stored in or available in base station 2, and in case of determining that information regarding non-terrestrial communication node 2 is stored in in base station 2 or available, may request base station 2 to transfer information regarding non-terrestrial communication node 2 to base station 1 (②). According to the request, information regarding non-terrestrial communication node 2 may be transferred from base station 2 to base station 1 (③).

The CU 1 of base station 1 may update SIB information based on the received information, and base station 1 may transmit a broadcasting message including the updated SIB information to the UE, and the UE may access the cell (A) formed by non-terrestrial network communication node 2, based on the SIB information included in the received message.

The information transfer method according to an embodiment described with reference to FIG. 8 is efficient in that, if base stations are relatively close to each other, transferring information between base stations is more effective than transferring information from the core network to the base stations.

The non-terrestrial network management server, the network functions of the core network, and the base stations illustrated in FIG. 8 may correspond to the components of the system illustrated in FIG. 4.

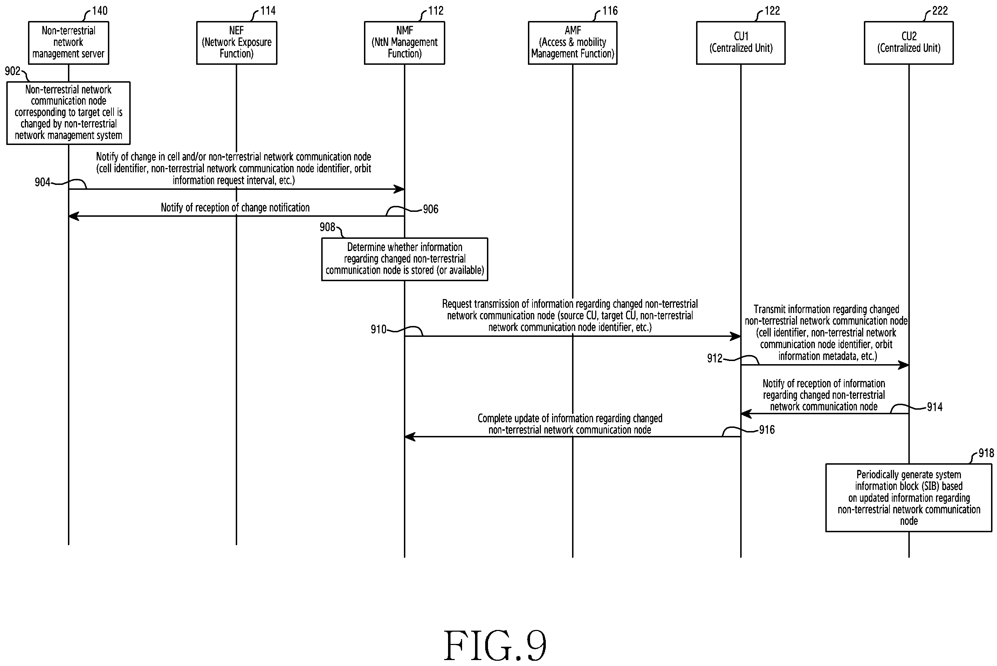

FIG. 9 illustrates an information transfer method according to an embodiment of the disclosure.

FIG. 9 may illustrate operations of the components described with reference to FIG. 4 in the non-terrestrial network communication node changing situation described with reference to FIG. 8.

In operation 902, the non-terrestrial network management server 140 recognizes that the non-terrestrial network communication node corresponding to the target cell is changed by the non-terrestrial network management system. Operation 902 may be an operation of recognizing that the non-terrestrial network communication node connected to the base station is changed.

In operation 904, the non-terrestrial network management server 140 notifies of a change in the cell and/or non-terrestrial network communication node. In operation 904, the non-terrestrial network management server 140 may transmit, to the NMF 112, at least one of the cell identifier, the non-terrestrial network communication node's identifier, location information, velocity information, and orbit information of the non-terrestrial network communication node. Such notifications and information may be transferred from the non-terrestrial network management server 140 to the NMF 112 through the NEF 114, or may be transferred directly from the non-terrestrial network management server 140 to the NMF 112. In addition, the notification message may include minimum information that allows the NMF 112 to identify the changed non-terrestrial network communication node. The NMF 112 may determine whether there is an entity (network function or base station, etc.) that stores required information through minimum information before requesting the non-terrestrial network management server 140 to provide all necessary information with regard to the changed terrestrial network communication node. Therefore, the size of data transmitted/received between the non-terrestrial network management server 140 and the NMF 112 may be reduced.

In operation 906, the NMF 112 informs the non-terrestrial network management server 140 of reception of the change notification and/or related information received in operation 904. Such notifications may be transferred to the non-terrestrial network management server 140 through the NEF 114, or may be directly transmitted from the NMF 112 to the non-terrestrial network management server 140.

In operation 908, the NMF 112 determines whether information regarding the changed non-terrestrial communication node is stored in a base station or available. In operation 908, the NMF 112 may determine whether there is a base station storing information regarding the changed non-terrestrial network communication node among multiple base stations. That is, the NMF 112 may determine whether information regarding the changed non-terrestrial communication node is stored in a specific base station. The NMF 112 may generate management information indicating information regarding the non-terrestrial communication node stored by the base stations, and operation 908 may be performed based on the management information. Through operation 908, the NMF 112 may identify which base station stores information regarding the changed non-terrestrial network communication node. In operation 908, whether the information is available may be determined based on the validity period of the information regarding the non-terrestrial network communication node.

In operation 910, in case of determining that information regarding the changed non-terrestrial communication node is stored in CU 1 122 (or determining that the same is available) in operation 908, the NMF 112 requests CU 1 122 to transfer information regarding the changed non-terrestrial communication node to CU 2 222. The request may include the identifier regarding the changed non-terrestrial communication node, and information regarding the source CU (e.g., CU 1) and/or the target CU (e.g., CU 2). In addition, the request may include information regarding information to be transferred by CU 1 122 to CU 2 222.

In operation 912, CU 1 122 transmits information regarding the changed non-terrestrial communication node to CU 2 222 according to the request of operation 910. The information regarding the changed non-terrestrial communication node may include all information necessary for the base station 122 to change the IE of the SIB (e.g., the non-terrestrial communication node's identifier, location information, velocity information, orbit information, etc.).

In operation 914, CU 2 222 notifies CU 1 122 of reception of information regarding the changed non-terrestrial communication node. Upon receiving all information for changing the IE of the SIB, the CU 2 222 may transmit an ACK.

In operation 916, CU 1 122 notifies the NMF 112 of completed update of information regarding the changed non-terrestrial network communication node.

In an embodiment, operation 914 and operation 916 may be integrated, and CU 2 222 may transfer a notification to the NMF 112 to inform the same of reception of information regarding the non-terrestrial network communication node and update completion.

In operation 918, CU 2 222 of the base station generates a system information block based on the updated information regarding the non-terrestrial communication node. CU 2 222 may periodically generate a system information block.

Although not illustrated in FIG. 9, after operation 918, the base station may transmit updated information regarding the terrestrial network communication node to the UE, and the UE may access the cell of the changed terrestrial network communication node, based on the received information, and perform communication with the base station.

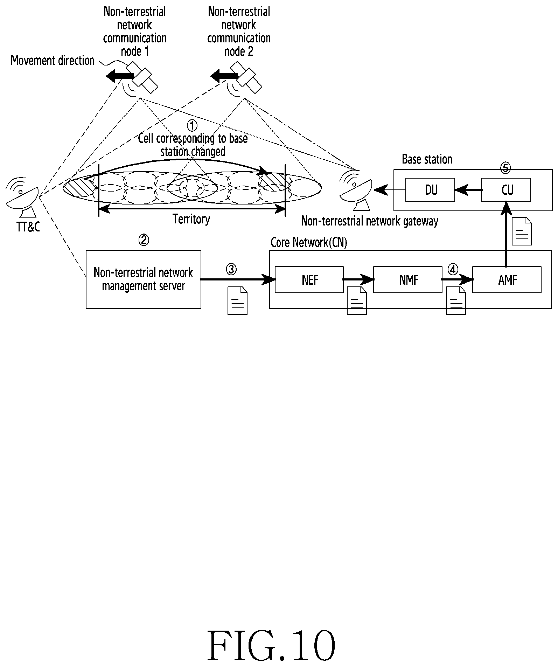

FIG. 10 illustrates a system for transferring information regarding a non-terrestrial communication node according to an embodiment of the disclosure.

FIG. 10 illustrates a system for transferring information regarding a non-terrestrial network communication node in case that the non-terrestrial network communication node connected to the base station is changed from non-terrestrial network communication node 1 to non-terrestrial network communication node 2 according to the earth moving cell operation scheme.

According to the earth-moving cell operation scheme, non-terrestrial network communication node 1 moves, and the cell formed by non-terrestrial network communication node 1 also moves together. In case that non-terrestrial communication node 1 continues to move such that the cell location is out of the range of a specific region or area (for example, a region outside a border or a marine area far from the land), there is no longer a need to operate the cell, and the cell corresponding to the base station may be changed (①). In this case, as the cell corresponding to the base station is changed, the non-terrestrial network communication node connected to the base station may be changed from non-terrestrial network communication node 1 to non-terrestrial network communication node 2.

The non-terrestrial network management server may generate (②) information regarding non-terrestrial network communication node 2 connected to the base station and may transmit the same to the core network (②).

Information regarding non-terrestrial network communication node 2 may be transferred from the NEF of the core network to the NMF, and transferred from the NMF to the AMF (④). In addition, information regarding non-terrestrial network communication node 2 may be transmitted to the CU of the base station through the AMF (⑤).

The CU of the base station may update system information block (SIB) information based on the received information, and may transmit a broadcasting message including the updated SIB information to the UE. The UE may access the cell formed by non-terrestrial network communication node 2, based on the SIB information included in the received message.

The information transfer method according to an embodiment described with reference to FIG. 10 may improve the reliability and speed of information transfer by transferring information to the base station through the control plane of the core network, not through a management plane.

The non-terrestrial network management server, network functions of the core network, and the base station illustrated in FIG. 10 may correspond to the components of the system illustrated in FIG. 4.

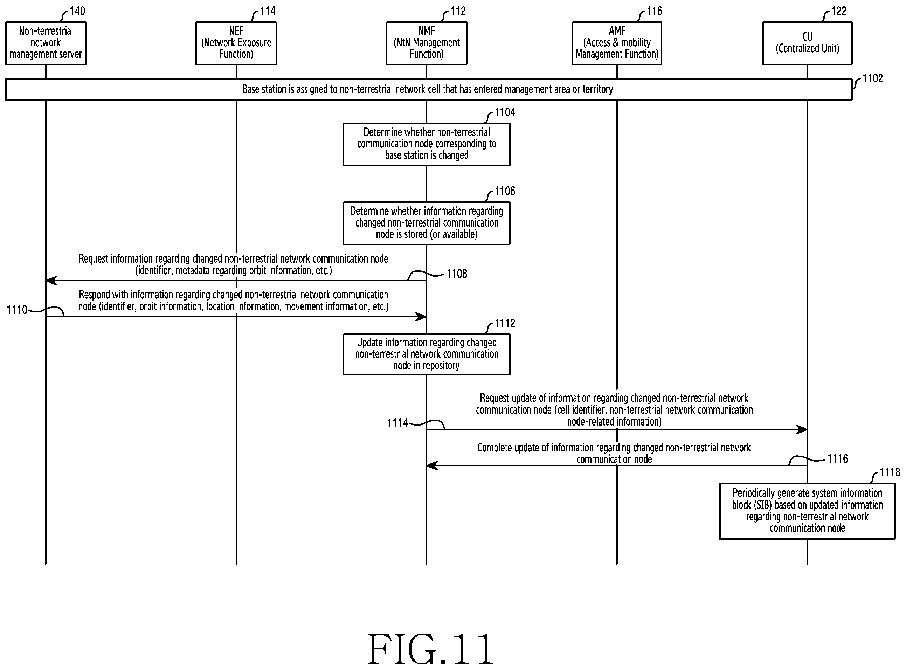

FIG. 11 illustrates an information transfer method according to an embodiment of the disclosure.

FIG. 11 may illustrate operations of the components described with reference to FIG. 4 in the non-terrestrial network communication node changing situation described with reference to FIG. 10.

In operation 1102, a base station may be assigned to a non-terrestrial cell that has entered a management area or territory. Operation 1102 may be performed by coordination between a non-terrestrial network management system and/or network functions inside a core network.

In operation 1104, the NMF 112 determines whether the non-terrestrial network communication node corresponding to (or connected to) the base station has been changed. Even in case that the cell assigned to the base station is changed, the non-terrestrial network communication node connected to the base station may not be changed in some cases. For example, in case that the changed cell is located in the same satellite's coverage area and located in the management area, the base station may be connected to the same satellite. Therefore, in operation 1104, the NMF 112 may determine whether the non-terrestrial communication node corresponding to (or connected to) the base station has been changed.

In operation 1106, the NMF 112 determines whether information regarding the changed non-terrestrial communication node is stored or available. In operation 1106, the NMF 112 may determine whether information regarding the non-terrestrial communication node is stored (or available) in its own memory, or whether information regarding the non-terrestrial communication node is stored (or available) in a network function of the core network (e.g., a network function including a database capable of storing information regarding the non-terrestrial communication node, such as a UDM or UDR). In operation 1106, whether the information is available may be determined based on the validity period of information regarding the non-terrestrial communication node.

In operation 1108, in case of determining that no information regarding the changed non-terrestrial network communication node is stored (or determining that no information is available) in operation 1106, the NMF 112 requests the non-terrestrial network management server 140 to provide information regarding the changed non-terrestrial network communication node. The request may include the identifier of the changed non-terrestrial communication node and/or metadata related to the requested information. Information included in the request may be transferred to the NMF 112 in operation 1102.

In operation 1110, the non-terrestrial network management server 140 transmits information regarding the changed non-terrestrial network communication node to the NMF 112 in response to the request in operation 1108. In operation 1110, information may be transferred through the NEF 114, or may be directly transferred from the non-terrestrial network management server 140 to the NMF 112.

In operation 1112, the NMF 112 updates (or stores) information regarding the non-terrestrial network communication node received by operation 1110. The NMF 112 may update (or store) information regarding the non-terrestrial communication node in its own memory, or may update (or store) information regarding the non-terrestrial communication node in a network function of the core network (e.g., a network function including a database capable of storing information of the non-terrestrial communication nodes, such as a UDM or UDR).

In operation 1114, the NMF 112 requests the base station's CU 122 to update information regarding the changed non-terrestrial communication node. The request includes information regarding the changed non-terrestrial communication node. In addition, in operation 1112, the request message may be transferred to the CU 122 through the AMF 116 or may be directly transferred from the NMF 112 to the CU 122.

In operation 1116, the CU 122 transfers a notification to the NMF 112 to indicate completed update of information regarding the changed non-terrestrial network communication node. The notification may be transferred to the NMF 112 through the AMF 116, or may be directly transferred from the CU 122 to the NMF 112.

In operation 1118, the CU 122 of the base station generates a system information block based on updated information regarding the non-terrestrial communication node. The CU 122 may periodically generate a system information block.

Although not illustrated in FIG. 11, after operation 1118, the base station may transmit updated information regarding the non-terrestrial communication node to the UE, and the UE may access the cell of the changed non-terrestrial communication node, based on the received information, and perform communication with the base station.

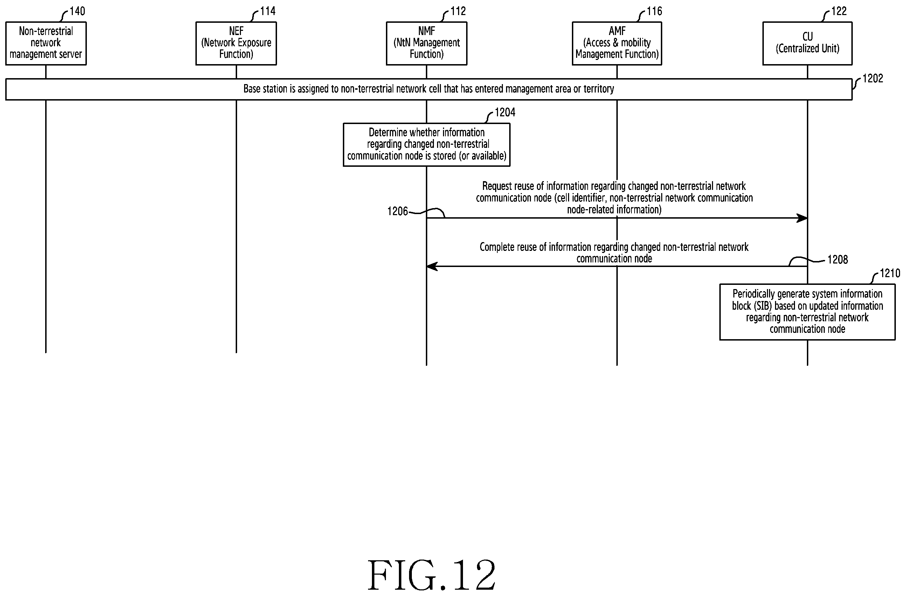

FIG. 12 illustrates an information transfer method according to an embodiment of the disclosure.

FIG. 12 may illustrate operations of the components described with reference to FIG. 4 in the non-terrestrial network communication node changing situation described with reference to FIG. 10.

In operation 1202, a base station may be assigned to a non-terrestrial cell that has entered a management area or territory. Operation 1202 may be performed by coordination between a non-terrestrial network management system and/or network functions inside a core network.

In operation 1206, the NMF 112 determines whether information regarding the changed non-terrestrial communication node is stored or available. In operation 1206, the NMF 112 may determine whether information regarding the non-terrestrial communication node is stored (or available) in its own memory, or whether information regarding the non-terrestrial communication node is stored (or available) in a network function of the core network (e.g., a network function including a database capable of storing information regarding the non-terrestrial communication node, such as a UDM or UDR). In addition, operation 1206 may include an operation in which the NMF 112 determines whether information regarding the non-terrestrial communication node is stored (or available) in the base station. In operation 1206, whether the information is available may be determined based on the validity period of information regarding the non-terrestrial communication node.

In operation 1208, in case of determining that information regarding the changed non-terrestrial network communication node is stored (or determining that information is available) in operation 1206, the NMF 112 requests the CU 122 of the base station to provide information regarding the changed non-terrestrial network communication node (or to use stored information). In addition, in operation 1208, the request message may be transferred to the CU 122 through the AMF 116, or may be directly transferred from the NMF 122 to the CU 122. The information regarding the changed non-terrestrial network communication node included in the request message may include all information necessary for the base station 122 to change the IE of the SIB (e.g., the identifier, location information, velocity information, orbit information of the non-terrestrial communication node, and the like).

In operation 1208, the CU 122 transfers a notification to the NMF 112 to notify the same of completed update (or use) of information regarding the changed non-terrestrial network communication node. The notification may be transferred to the NMF 112 through the AMF 116, or may be directly transferred from the CU 122 to the NMF 112.

In operation 1210, the CU 122 of the base station generates a system information block based on updated information regarding the non-terrestrial communication node. The CU 122 may periodically generate a system information block.

Although not illustrated in FIG. 12, after operation 1210, the base station may transmit updated information regarding the non-terrestrial communication node to the UE, and the UE may access the cell of the changed non-terrestrial communication node, based on the received information, and perform communication with the base station.

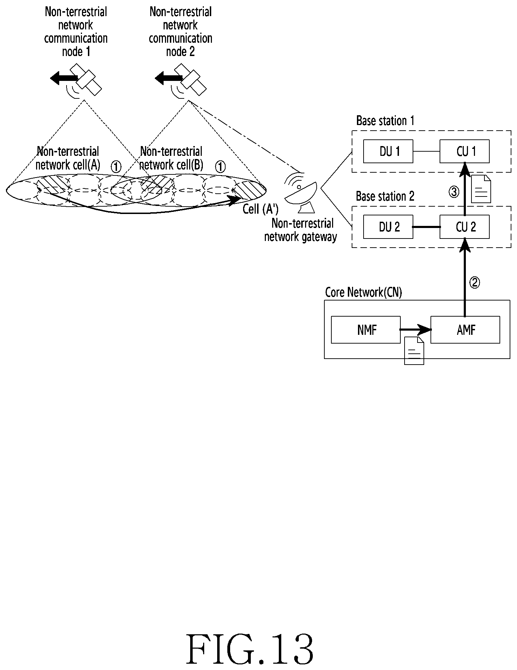

FIG. 13 illustrates a system for transferring information regarding a non-terrestrial communication node according to an embodiment of the disclosure.

FIG. 13 illustrates a system for transferring information regarding a non-terrestrial network communication node in case that the non-terrestrial network communication node connected to the base station is changed from non-terrestrial network communication node 1 to non-terrestrial network communication node 2 according to the earth moving cell operation scheme.

According to the earth-moving cell operation scheme, non-terrestrial network communication node 1 moves, and the cell A formed by non-terrestrial network communication node 1 also moves together. In case that non-terrestrial communication node 1 continues to move such that the location of the cell A is out of the range of a specific region or area (for example, a region outside a border or a marine area far from the land), there is no longer a need to operate the cell A, and the cell corresponding to the base station may be changed (①). In this case, as the cell corresponding to the base station is changed, the non-terrestrial network communication node connected to the base station may be changed from non-terrestrial network communication node 1 to non-terrestrial network communication node 2.

In FIG. 13, the NMF may determine whether information regarding non-terrestrial communication node 2 is stored in base station 2 or is available. Upon determining that information regarding non-terrestrial communication node 2 is stored in base station 2 or is available, the NMF may request base station 2 to transfer information regarding non-terrestrial communication node 2 to base station 1 (②). In addition, according to the request, information regarding non-terrestrial network communication node 2 may be transferred from base station 2 to base station 1 (③).

VU 1 of base station 1 may update SIB information, based on the received information, and base station 1 may transmit a broadcasting message including the updated SIB information to the UE, and the UE may access the cell A' formed by non-terrestrial communication node 2, based on the SIB information included in the received message.

The information transfer method according to an embodiment described with reference to FIG. 13 is efficient in that, if base stations are relatively close to each other, transferring information between base stations is more effective than transferring information from the core network to the base stations.

The non-terrestrial network management server, the network functions of the core network, and the base stations illustrated in FIG. 13 may correspond to the components of the system illustrated in FIG. 4.

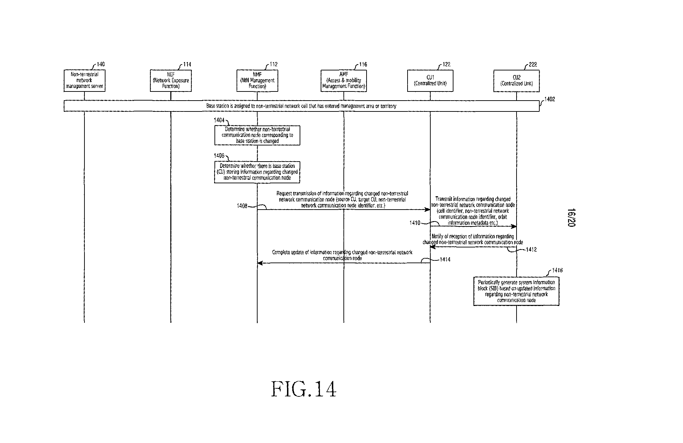

FIG. 14 illustrates an information transfer method according to an embodiment of the disclosure.

FIG. 14 may illustrate operations of the components described with reference to FIG. 4 in the non-terrestrial network communication node changing situation described with reference to FIG. 13.

In operation 1402, a base station may be assigned to a non-terrestrial cell that has entered a management area or territory. Operation 1402 may be performed by coordination between a non-terrestrial network management system and/or network functions inside a core network.

In operation 1404, the NMF 112 determines whether the non-terrestrial network communication node corresponding to (or connected to) the base station has been changed. Even in case that the cell assigned to the base station is changed, the non-terrestrial network communication node connected to the base station may not be changed in some cases. For example, in case that the changed cell is located in the same satellite's coverage area and located in the management area, the base station may be connected to the same satellite. Therefore, in operation 1104, the NMF 112 may determine whether the non-terrestrial communication node corresponding to (or connected to) the base station has been changed.

In operation 1406, the NMF 112 determines whether information regarding the changed non-terrestrial communication node is stored in the base station or available. In operation 1406, the NMF 112 may determine whether there is a base station storing information regarding the changed non-terrestrial network communication node among multiple base stations. That is, the NMF 112 may determine whether information regarding the changed non-terrestrial communication node is stored in a specific base station. The NMF 112 may generate management information indicating information regarding the non-terrestrial communication node stored by the base stations, and operation 1406 may be performed based on the management information. Through operation 1406, the NMF 112 may identify which base station stores information regarding the changed non-terrestrial network communication node. In operation 1406, whether the information is available may be determined based on the validity period of the information regarding the non-terrestrial network communication node.

In operation 1408, in case of determining that information regarding the changed non-terrestrial communication node is stored in CU 1 122 (or determining that the same is available) in operation 1406, the NMF 112 requests CU 1 122 to transfer information regarding the changed non-terrestrial communication node to CU 2 222. The request may include the identifier regarding the changed non-terrestrial communication node, and information regarding the source CU (e.g., CU 1) and/or the target CU (e.g., CU 2).

In operation 1410, CU 1 122 transmits information regarding the changed non-terrestrial communication node to CU 2 222 according to the request of operation 1408. The information regarding the changed non-terrestrial communication node may include all information necessary for the base station 122 to change the IE of the SIB (e.g., the non-terrestrial communication node's identifier, location information, velocity information, orbit information, etc.).

In operation 1412, CU 2 222 notifies CU 1 122 of reception of information regarding the changed non-terrestrial communication node. Subsequent to operation 1412, CU 1 122 may perform an operation of informing NMF 112 of completed update of information regarding the changed non-terrestrial communication node.

In an embodiment, CU 2 122 may transfer a notification to the NMF 112 to notify of reception of information regarding the changed non-terrestrial network communication node and completed update.

In operation 1414, CU 2 222 of base station 2 generates a system information block based on the updated information regarding the non-terrestrial communication node. CU 2 222 may periodically generate a system information block.

Although not illustrated in FIG. 14, after operation 1414, the base station may transmit updated information regarding the terrestrial network communication node to the UE, and the UE may access the cell of the changed terrestrial network communication node, based on the received information, and perform communication with the base station.

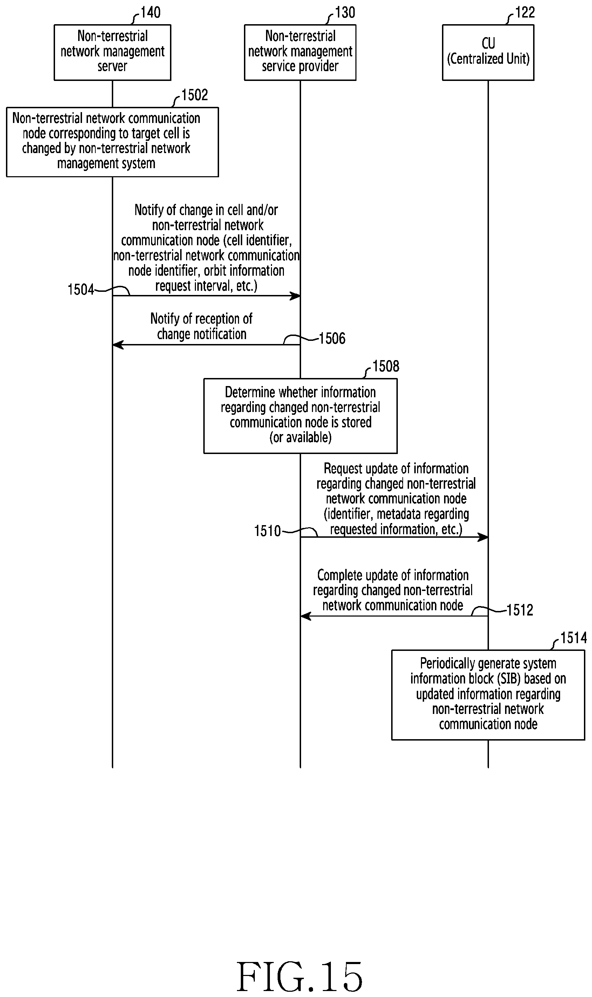

FIG. 15 illustrates an information transfer method according to an embodiment of the disclosure.

FIG. 15 illustrates a method of transferring information regarding a changed non-terrestrial network communication node through a non-terrestrial network management service provider 130 in a situation in which the non-terrestrial network communication node connected to the base station is changed. That is, FIG. 15 may illustrate an embodiment in which signaling is performed through the management plane.

In operation 1502, the non-terrestrial network management server 140 recognizes that the non-terrestrial network communication node corresponding to the target cell is changed by the non-terrestrial network management system. Operation 1502 may be an operation of recognizing that the terrestrial network communication node connected to the base station is changed.

In operation 1504, the non-terrestrial network management server 140 notifies the non-terrestrial network management service provider 130 of a change in the cell and/or terrestrial network communication node. In operation 1504, the non-terrestrial network management server 140 may transmit at least one of the cell identifier, the identifier of the non-terrestrial network communication node, the location information, velocity information, and orbit information of the non-terrestrial network communication node to the non-terrestrial network management service provider 130.

In operation 1506, the non-terrestrial network management service provider 130 notifies the non-terrestrial network management server 140 of reception of the change notification and/or related information received in operation 1504.

In operation 1508, the non-terrestrial network management service provider 130 determines whether information regarding the changed non-terrestrial communication node is stored or available. In operation 1508, the non-terrestrial network management service provider 130 may determine whether information regarding the non-terrestrial communication node is stored (or available) in its own memory, or whether information regarding the non-terrestrial communication node is stored (or available) in a network function of the core network (e.g., a network function including a database capable of storing information regarding the non-terrestrial communication node, such as a UDM or UDR). In addition, the non-terrestrial network management service provider 130 may determine whether information regarding the non-terrestrial communication node is stored (or available) in other base stations. In operation 1508, whether the information is available may be determined based on the validity period of information regarding the non-terrestrial communication node.

In operation 1510, in case of determining that information regarding the changed non-terrestrial network communication node is stored (or determining that information is available) in operation 1508, the non-terrestrial network management service provider 130 requests the CU 122 to update information regarding the changed non-terrestrial network communication node. The request may include information regarding the changed non-terrestrial network communication node. The information regarding the changed non-terrestrial network communication node may include all information necessary for the base station 122 to change the IE of the SIB (e.g., the identifier, location information, velocity information, orbit information of the non-terrestrial communication node, and the like).

In operation 1512, the CU 122 transfers a notification to the NMF 112 to the non-terrestrial network management service provider 130 to notify the same of completed update of information regarding the changed non-terrestrial network communication node.

In operation 1514, the CU 122 of the base station generates a system information block based on updated information regarding the non-terrestrial communication node. The CU 122 may periodically generate a system information block.

Although not illustrated in FIG. 15, after operation 1514, the base station may transmit updated information regarding the non-terrestrial communication node to the UE, and the UE may access the cell of the changed non-terrestrial communication node, based on the received information, and perform communication with the base station.

As in FIG. 15, the system according to an embodiment of the disclosure may transfer information regarding the non-terrestrial communication node to the base station through a management plane.

The operations according to the embodiments described with reference to FIG. 6 to FIG. 15 may be combined by a person of ordinary skill in the art, and embodiments which may be derived by a combination of the embodiments described with reference to FIG. 6 to FIG. 16 may be understood as being described by the disclosure.

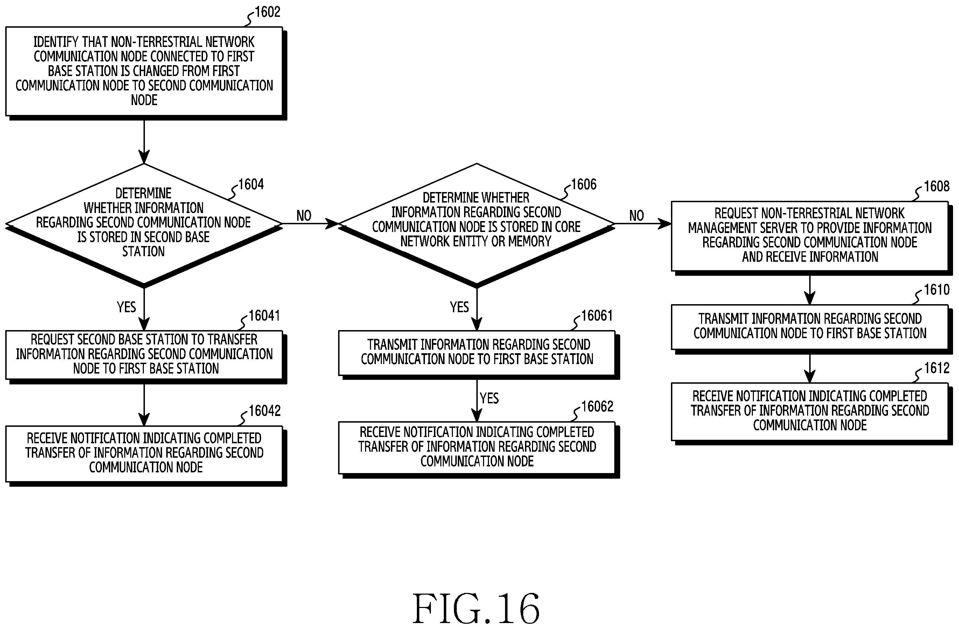

FIG. 16 illustrates an information transfer method of a non-terrestrial network management function (NMF) according to an embodiment of the disclosure.

FIG. 16 illustrates a flowchart of operations performed by the NMF in the case of a change in the non-terrestrial network communication node corresponding to the base station in wireless communication using a non-terrestrial network.

In operation 1602, the NMF identifies that the non-terrestrial network communication node connected to the first base station is changed from the first communication node to the second communication node. Operation 1602 may include an operation of receiving a notification from the non-terrestrial network management server or other network entities, or identifying whether the non-terrestrial network communication node is changed by the NMF' own determination.

In operation 1604, the NMF determines whether information regarding the second communication node is stored in the second base station. Operation 1604 may be an operation of identifying a base station that stores information regarding the second communication node. The NMF may generate management information indicating information regarding non-terrestrial network communication nodes stored (or used) by multiple base stations. Based on such management information, the NMF may identify which base station stores information regarding the second communication node. That is, the NMF may determine that information regarding the second communication node is stored in the second base station.

In operation 1606, the NMF determines whether information regarding the second communication node is stored in a network function of the core network (e.g., a network function including a database capable of storing information regarding the non-terrestrial communication node, such as UDR, UDM), or in its own memory. Upon determining, in operation 1606, that information regarding the second communication node is stored in the memory of the NMF or in another network function, the NMF may instantly perform signaling to the base station without having to request the non-terrestrial network management server to provide information regarding the non-terrestrial communication node. The information regarding the second communication node may include all information required by the base station to change the IE of the SIB (for example, the non-terrestrial network communication node's identifier, location information, velocity information, orbit information, and the like).

In operation 1608, in case of determining in operation 1606 that no information regarding the second communication node is stored, the NMF requests the non-terrestrial network management server to provide information regarding the second communication node, and receives information regarding the second communication node in response to the request.

In operation 1610, the NMF transmits information regarding the second communication node to the first base station. In operation 1612, the NMF receives a notification indicating completed transfer of information regarding the second communication node.

In operation 16041, in case of determining in operation 1604 that information regarding the second communication node is stored in the second base station, the NMF requests the second base station to transmit information regarding the second communication node to the first base station.

The case in which the second base station stores information regarding the second communication node may indicate that the second base station has been connected to the second communication node. The first base station is also connected to the second communication node, and there is a possibility that the second base station is not located far from the first base station. Therefore, in such a situation, it may be more advantageous to transmit information from the second base station to the first base station than to transmit information from the NMF to the first base station. Particularly, in the case of a communication service operated in a country with a vast territory, the physical distance between base stations may be shorter than the physical distance between the core network and base stations, and the transmission/reception environment between the base stations may be more favorable.

In operation 16042, the NMF receives a message indicating completed transfer of information regarding the second communication node to the first base station.

In operation 16061, in case of determining in operation 1606 that information regarding the second communication node is stored, the NMF transmits information regarding the second communication node to the first base station. In case that the NMF has information regarding the second communication node stored in its own memory, the NMF may directly transmit the information regarding the second communication node to the first base station. In case that information regarding the second communication node is stored in a database network function, such as a unified data management (UDM) or a unified data repository (UDR), the NMF may receive the information regarding the second communication node from the UDM or the UDR and transmit the information to the first base station, or may request the UDM or the UDR to transmit the information regarding the second communication node to the first base station. Information regarding the second communication node may include all information necessary for the base station to change the IE of the SIB (e.g., the non-terrestrial network communication node's identifier, location information, velocity information, orbit information, and the like).

In operation 16062, the NMF receives a notification indicating completed transfer of information regarding the second communication node to the first base station.

In the embodiment of FIG. 16, the order of operations may be changed, and some operations may be omitted so that the embodiment may be changed. For example, the order of operations 1604 and 1606 may be changed, and operations 16042, 16062, and 1612 may be omitted.

The operations of FIG. 16 described above may correspond to the operations of the NMF described with reference to FIG. 4 to FIG. 14.

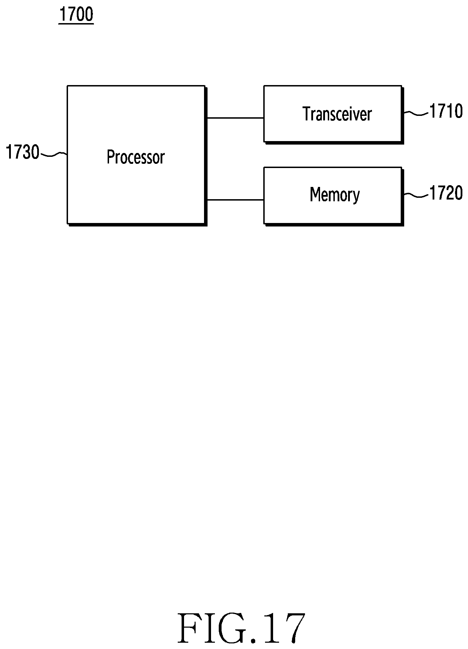

FIG. 17 illustrates components of a network entity according to an embodiment of the disclosure. The network entity of FIG. 17 may correspond to the AMF, NEF, or NMF of the core network described with reference to FIG. 4 to FIG. 14. In addition, the network entity in FIG. 17 may correspond to a non-terrestrial network communication node, a non-terrestrial network management server, or a non-terrestrial network management service provider.

Referring to FIG. 17, the network entity 1700 according to an embodiment includes a transceiver 1710, a processor 1730 connected to the transceiver 1710, and a memory 1720 connected to the processor 1730. The network entity 1700 in FIG. 17 may perform the operations described with reference to FIG. 4 and FIG. 16.

The network entity 1700 may include more or fewer components than the above-described components. In addition, the transceiver 1710, the processor 1730, and the memory 1720 may be implemented as a single chip.

The transceiver 1710 refers to a receiver and a transmitter combined, and may transmit/receive information with a base station or other network entities. The transmitted/received information may include control information, data, and other signaling information. The transceiver 1710 may include an RF transmitter for up-converting and amplifying the frequency of a transmitted signal, and an RF receiver for low-noise amplifying and down-converting the frequency of a received signal. However, this is only an example of the transceiver 1710, and the components of the transceiver 1710 are not limited to the RF transmitter and the RF receiver. The transceiver 1710 may receive a signal through a radio channel and output the same to the processor 1730, and may transmit a signal output from the processor 1730 through the radio channel.

The memory 1720 may store programs and data necessary for the operation of the device. In addition, the memory 1720 may store control information or data included in a signal acquired from the device. The memory 1720 may be a storage medium such as a read-only memory (ROM), a random access memory (RAM), a hard disk, a CD-ROM, or a DVD, or a combination of storage media.

The processor 1730 may control a series of processes so that the device operates as described above. For example, the transceiver 1810 may receive data signals including transmitted messages, and the processor 1830 may identify the result of receiving the transmitted data signals.

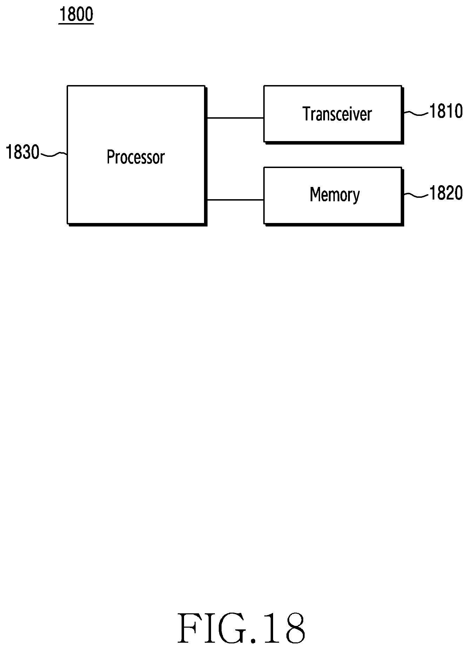

FIG. 18 illustrates components of a base station according to an embodiment of the disclosure.

The base station 1800 described with reference to FIG. 18 may correspond to the base station described with reference to FIG. 3 to FIG. 16.

Referring to FIG. 18, the base station 1800 includes a transceiver 1810, a processor 1830 connected to the transceiver 1810, and a memory 1820 connected to the processor 1830. The base station 1800 in FIG. 18 may perform the operations described with reference to FIG. 4 to FIG. 15.

The base station 1800 may include more or fewer components than the components described above. In addition, the transceiver 1810, the processor 1830, and the memory 1820 may be implemented as a single chip.

The transceiver 1810 generically refers to a receiver and a transmitter combined, and may transmit/receive information with the user's equipment or network functions (e.g., an AMF, a NEF, an NMF, etc.) of a core network. The transmitted/received information may include control information, data, and other signaling information. For example, signaling information for changing SIB information according to an embodiment may be received by the base station 1800 through the transceiver 1810, and the information may be transmitted to the UE through the transceiver 1810. The transceiver 1810 may include an RF transmitter for up-converting and amplifying the frequency of a transmitted signal, and an RF receiver for low-noise amplifying and down-converting the frequency of a received signal. However, this is only an example of the transceiver 1810, and the components of the transceiver 1810 are not limited to the RF transmitter and the RF receiver. The transceiver 1810 may receive a signal through a radio channel and output the same to the processor 1830, and may transmit a signal output from the processor 1830 through the radio channel.

The memory 1820 may store programs and data necessary for the operation of the device. In addition, the memory 1820 may store control information or data included in a signal acquired from the device. The memory 1820 may be a storage medium such as a read-only memory (ROM), a random access memory (RAM), a hard disk, a CD-ROM, or a DVD, or a combination of storage media.

The processor 1830 may control a series of processes so that the device operates as described above. For example, the transceiver 1810 may receive data signals including messages transmitted from the UE, and the processor 1830 may identify the result of receiving the transmitted data signals.

In an embodiment, a method for operating an NMF according to an embodiment of the disclosure may include an operation of identifying that a non-terrestrial network communication node connected to a first base station has changed from a first node to a second node, an operation of determining whether information regarding the second node is stored, and an operation of transmitting information regarding the second node to the first base station, based on whether information regarding the second node is stored.

In an embodiment, in case that information regarding the second node is not stored, the method for operating an NMF may further include an operation of requesting information regarding the second node from a non-terrestrial network management server and an operation of receiving information regarding the second node from the non-terrestrial network management server.

In an embodiment, the operation of determining whether information regarding the second node is stored may include an operation of determining whether information regarding the second node is stored in the second base station. In addition, in case that information regarding the second node is stored in the second base station, the operation of transmitting information regarding the second node to the first base station may include an operation of requesting the second base station to transmit information regarding the second node to the first base station.

In an embodiment, the operation of determining whether information regarding the second node is stored may further include an operation of determining whether information regarding the second node is stored in the memory of the first network entity or the second network entity of the core network.

In an embodiment, in case that the second network entity (e.g., in a database of a network function including a database capable of storing information regarding a non-terrestrial communication node, such as a UDM or a UDR) of the core network stores information regarding the second node, the operation of transmitting information regarding the second node to the first base station may include an operation of transmitting the information regarding the second node to the first base station, based on the second network entity.

In an embodiment, in case that information regarding the second node is stored in the memory of the first network entity, the operation of transmitting information regarding the second node to the first base station may include transmitting information regarding the second node stored in the memory to the first base station.

In an embodiment, the method for operating an NMF further includes an operation of updating management information indicating that information regarding the second node is stored in the second base station. The management information indicates information regarding the non-terrestrial network communication node stored with regard to each base station. The operation of determining whether information regarding the second node is stored in the second base station is based on the management information.

In an embodiment, the information regarding the second node may include at least one of the second node's identification information, location information, orbit information, and movement information.

According to embodiments of the disclosure, even if the non-terrestrial network communication node or non-terrestrial network cell corresponding to the base station is changed according to the non-terrestrial network cell operating method, the base station (or CU) may rapidly update the SIB information, thereby improving the quality of non-terrestrial network communication.

In addition, according to embodiments of the disclosure, in case that the non-terrestrial network communication node or non-terrestrial network cell corresponding to the base station is changed during wireless communication using a non-terrestrial network, signaling information related thereto may be transmitted in a highly reliable manner while minimizing delay.

In addition, according to embodiments of the disclosure, base stations or network functions of the core network in which signaling information is prestored may be utilized such that redundant information transfer is prevented, thereby improving signaling efficiency.

It should be appreciated that various embodiments of the disclosure and the terms used therein are not intended to limit the technological features set forth herein to particular embodiments and the disclosure includes various changes, equivalents, or alternatives for a corresponding embodiment. With regard to the description of the drawings, similar reference numerals may be used to refer to similar or related elements. A singular form of a noun corresponding to an item may include one or more of the items, unless the relevant context clearly indicates otherwise. As used herein, each of such phrases as "A or B," "at least one of A and B," "at least one of A or B," "A, B, or C," at least one of A, B, and C," and "at least one of A, B, or C," may include all possible combinations of the items enumerated together in a corresponding one of the phrases. Such terms as "a first", "a second", "the first", and "the second" may be used to simply distinguish a corresponding element from another, and does not limit the elements in other aspect (e.g., importance or order). If an element (e.g., a first element) is referred to, with or without the term "operatively" or "communicatively", as "coupled with/to" or "connected with/to" another element (e.g., a second element), it means that the element may be coupled/connected with/to the other element directly (e.g., wiredly), wirelessly, or via a third element.

As used in various embodiments of the disclosure, the term "module" may include a unit implemented in hardware, software, or firmware, and may be interchangeably used with other terms, for example, "logic," "logic block," "component," or "circuit". The "module" may be a single integrated component, or a minimum unit or part thereof, adapted to perform one or more functions. For example, according to an embodiment, the module may be implemented in the form of an application-specific integrated circuit (ASIC).

Various embodiments as set forth herein may be implemented as software (e.g., a program) including one or more instructions that are stored in a storage medium (e.g., the internal memory 1720 or 1820 or external memory 1720 or 1820) that is readable by a machine (e.g., the electronic device 1700 or 1800). For example, a processor (e.g., the processor 1730 or 1830) of the machine (e.g., an electronic device) may invoke at least one of the one or more instructions stored in the storage medium, and execute it. This allows the machine to be operated to perform at least one function according to the at least one instruction invoked. The one or more instructions may include codes generated by a compiler or codes executable by an interpreter. The machine-readable storage medium may be provided in the form of a non-transitory storage medium. Herein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, methods according to various embodiments of the disclosure may be included and provided in a computer program product. The computer program product may be traded as a product between a seller and a purchaser. The computer program product may be distributed in the form of a machine-readable storage medium (e.g., compact disc read only memory (CD-ROM)), or be distributed (e.g., downloaded or uploaded) online via an application store (e.g., Play Store TM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each element (e.g., a module or a program) of the above-described elements may include a single entity or multiple entities, and some of the multiple entities may be separately disposed in any other element. According to various embodiments, one or more of the above-described elements or operations may be omitted, or one or more other elements or operations may be added. Alternatively, or additionally, multiple components (e.g., modules or programs) may be integrated into a single component. In such a case, according to various embodiments, the integrated element may still perform one or more functions of each of the plurality of elements in the same or similar manner as they are performed by a corresponding one of the plurality of elements before the integration. According to various embodiments, operations performed by the module, the program, or another element may be carried out sequentially, in parallel, repeatedly, or heuristically, or one or more of the operations may be executed in a different order or omitted, or one or more other operations may be added.

## Claims

1. A method for operating a first network entity in a wireless communication system using a non-terrestrial network, the method comprising:
identifying that a non-terrestrial network communication node connected to a first base station is changed from a first node to a second node;
determining whether information regarding the second node is stored; and
transmitting information regarding the second node to the first base station, based on whether information regarding the second node is stored.

2. The method of claim 1, further comprising, in case that information regarding the second node is not stored:
requesting information regarding the second node from a non-terrestrial network management server; and
receiving information regarding the second node from the non-terrestrial network management server.

3. The method of claim 2, wherein the determining of whether information regarding the second node is stored comprises determining whether information regarding the second node is stored in a second base station, and
wherein in case that information regarding the second node is stored in the second base station, the transmitting of information regarding the second node to the first base station comprises requesting the second base station to transmit information regarding the second node to the first base station.

4. The method of claim 2, wherein the determining of whether information regarding the second node is stored further comprises determining whether information regarding the second node is stored in a second network entity of a core network or in the first network entity.

5. The method of claim 4, wherein in case that information regarding the second node is stored in the second network entity of the core network, the transmitting of information regarding the second node to the first base station comprises transmitting information regarding the second node to the first base station, based on the second network entity.

6. The method of claim 4, wherein in case that information regarding the second node is stored in the first network entity, the transmitting of information regarding the second node to the first base station comprises transmitting information regarding the second node to the first base station.

7. The method of claim 3, further comprising updating management information indicating that information regarding the second node is stored in the second base station,
wherein the management information indicates information regarding a non-terrestrial communication node stored with regard to each base station, and
wherein the determining of whether information regarding the second node is stored in the second base station is based on the management information.

8. The method of claim 5, wherein the first network entity comprises an NTN management function (NMF) entity,
wherein the second network entity comprises a network function entity comprising a database capable of storing information of a non-terrestrial communication node in a core network, and
wherein information regarding the second node comprises at least one of the second node's identification information, location information, orbit information, and movement information.

9. A first network entity in a wireless communication system, the device comprising:
a transceiver; and
a processor connected to the transceiver,
wherein the processor is configured to:
identify that a non-terrestrial network communication node connected to a first base station is changed from a first node to a second node;
determine whether information regarding the second node is stored; and
transmit information regarding the second node to the first base station, based on whether information regarding the second node is stored.

10. The device of claim 9, wherein the processor is configured to, in case that information regarding the second node is not stored:
request information regarding the second node from a non-terrestrial network management server; and
receive information regarding the second node from the non-terrestrial network management server.

11. The device of claim 10, wherein the processor is configured to:
determine whether information regarding the second node is stored in a second base station in order to determine whether information regarding the second node is stored, and
in case that information regarding the second node is stored in the second base station, request the second base station to transmit information regarding the second node to the first base station in order to transmit information regarding the second node to the first base station.

12. The device of claim 10, wherein the processor is configured to determine whether information regarding the second node is stored in a second network entity of a core network or in the first network entity in order to determine whether information regarding the second node is stored.

13. The device of claim 12, wherein the processor is configured to:
in case that information regarding the second node is stored in the second network entity of the core network, transmit information regarding the second node to the first base station, based on the second network entity, in order to transmit information regarding the second node to the first base station; and
in case that information regarding the second node is stored in the first network entity, transmit information regarding the second node to the first base station in order to transmit information regarding the second node to the first base station.

14. The device of claim 11, wherein the processor is configured to update management information indicating that information regarding the second node is stored in the second base station,
wherein the management information indicates information regarding a non-terrestrial communication node stored with regard to each base station, and
wherein determining of whether information regarding the second node is stored in the second base station is based on the management information.

15. The device of claim 13, wherein the first network entity comprises an NTN management function (NMF) entity,
wherein the second network entity comprises a network function entity comprising a database capable of storing information of a non-terrestrial communication node in a core network, and
wherein information regarding the second node comprises at least one of the second node's identification information, location information, orbit information, and movement information.
